# EUROPÄISCHE PATENTSCHRIFT

(11) **EP 2 635 631 B1**
(45) Veröffentlichungstag und Bekanntmachung des Hinweises auf die Patenterteilung: **01.03.2017**
(21) Anmeldenummer: 11782087.8
(22) Anmeldetag: 02.11.2011
(51) Int. Cl.: C08K 5/17, C08K 7/24

(54) **ZUSAMMENSETZUNG AUS POLYMEREN UND ELEKTRISCH LEITFÄHIGEM KOHLENSTOFF**
COMPOSITION MADE OF POLYMERS AND ELECTRICALLY CONDUCTIVE CARBON
COMPOSITION À BASE DE POLYMÈRES ET DE CARBONE ÉLECTROCONDUCTEUR

(30) Priorität: 05.11.2010 DE 102010043472
(43) Veröffentlichungstag der Anmeldung: 11.09.2013
(73) Patentinhaber: Evonik Degussa GmbH, 45128 Essen (DE)
(72) Erfinder: LEHMANN, Kathrin, 51377 Leverkusen (DE); STADTMUELLER, Stefan, 45481 Mülheim an der Ruhr (DE); SCHWAB, Peter, 45133 Essen (DE)
(86) Internationale Anmeldenummer: PCT/EP2011/069193
(87) Internationale Veröffentlichungsnummer: WO 2012/059489

(56) Entgegenhaltungen:
- DE-A1- 19 516 387
- DE-A1-102006 031 952

## Beschreibung

Gegenstand der Erfindung sind Polymerzusammensetzungen, insbesondere für Thermoplaste oder Duroplaste, die elektrisch leitfähige Kohlenstoffsubstrate wie Ruß, Kohlenstofffasern, Graphit, Graphen und/oder CNTs (Carbon Nanotubes) enthalten sowie Salze mit einem nichtmetallischen Kation oder eine synergistische Mischung aus diesen Salzen zusammen mit Metallsalzen, wobei die Kombination mit speziellen Dispergiermitteln essentiell ist.

Kunststoffe sind gemeinhin und bis auf wenige sehr spezielle Ausnahmen elektrische Isolatoren, auf denen sich bei der Herstellung, Verarbeitung und dem Gebrauch daraus hergestellter Folien oder Formteile hohe Oberflächenladungen ansammeln können.

Diese statischen Aufladungen führen zu unerwünschten Effekten und ernsten Gefahrensituationen, welche von der Anziehung von Staub, Haftung von hygienisch bedenklichen Verunreinigungen, Zerstörung elektronischer Bauteile durch Funkenüberschläge, physiologisch unangenehmen elektrischen Schlägen, Entzündung brennbarer Flüssigkeiten in Behältern oder Rohren, in denen diese gerührt, gegossen oder gefördert werden, bis hin zu Staubexplosionen beispielsweise beim Umfüllen mit Stäuben oder Mehlen gefüllter Großgebinde oder beim Gesteins- bzw. Kohleabbau reichen.

Es besteht daher seit dem Einsatz dieser Kunststoffe die Notwendigkeit, statische Aufladungen zu verhindern oder aber in einem Maße zu minimieren, dass diese nicht mehr gefährlich werden können.

Kunststoffe, die zu entsprechenden Polymerzusammensetzungen formuliert werden, können in die wesentlichen Gruppen der Thermoplaste und Duroplaste unterteilt werden.

Dabei bezeichnet man solche Polymere, die oberhalb der Gebrauchstemperatur einen Fließübergangsbereich besitzen als Thermoplaste. Thermoplaste sind lineare oder verzweigte Polymere, die im Falle amorpher Thermoplaste oberhalb der Glasübergangstemperatur (Tg), im Falle (teil)kristalliner Thermoplaste oberhalb der Schmelztemperatur (Tm) prinzipiell fließfähig werden. Sie können im erweichten Zustand durch Pressen, Extrudieren, Spritzgießen oder andere Formgebungsverfahren zu Formteilen verarbeitet werden. Die Kettenbeweglichkeit wird dabei so groß, dass die Polymermoleküle leicht aneinander abgleiten und der Werkstoff den schmelzflüssigen Zustand erreicht (Fließbereich, Polymerschmelze). Zu den Thermoplasten gehören weiterhin auch thermoplastisch verarbeitbare Kunststoffe mit ausgeprägten entropieelastischen Eigenschaften, die sogenannten thermoplastischen Elastomeren. Zu den Thermoplasten gehören alle aus linearen oder thermolabil vernetzten Polymermoleküle bestehenden Kunststoffe, zum Beispiel Polyolefine, Vinylpolymere, Polyester, Polyacetale, Polyacetatae, Polycarbonate, zum Teil auch Polyurethane und lonomere aber auch TPEs - thermoplastische Elastomere (RÖMPP ONLINE, Vers. 3.7, Carlowitz u. Wierer, Kunststoffe (Merkblätter), 1. Kapitel Thermoplaste, Berlin: Springer Verlag (1987), Domininghaus, S. 95 ff).

Duroplaste sind Kunststoffe, die durch irreversible und engmaschige Vernetzung über kovalente Bindungen aus Oligomeren (technisch: Prepolymeren), seltener aus Monomeren oder Polymeren entstehen. Das Wort "Duroplast" wird dabei sowohl für die Rohstoffe vor der Vernetzung (siehe Reaktionsharze) als auch als Sammelbezeichnung für die ausgehärteten, zumeist vollständig amorphen Harze verwendet. Duroplaste sind bei niedrigen Temperaturen stahlelastisch, und auch bei höheren Temperaturen können sie nicht viskos fließen, sondern verhalten sich bei sehr begrenzter Deformierbarkeit elastisch. Zu den Duroplasten gehören unter anderem die technisch wichtigen Stoffgruppen der Diallylphthalat-Harze (DAP), Epoxidharze (EP), Harnstoff-Formaldehyd-Harze (UF), Melamin-Formaldehyd-Harze (MF), Melamin-Phenol-Formaldehyd-Harze (MPF), Phenol-Formaldehyd-Harze und ungesättigten Polyesterharze (UPES) (RÖMPP ONLINE, Vers. 3.7, Becker, G. W.; Braun, D.; Woebcken, W., Kunststoff-Handbuch, Band 10: Duroplaste, 2. Aufl.; Hanser: München,(1988); Elias (6.) 1, 7, 476 ff.).

Ein deutlich höheres Niveau für die Ableitung von elektrischen Ladungen muss sogar noch erzielt werden, wenn Kunststoffe in elektronischen Bauteilen von Großgeräten wie z.B. im Trafo- oder Elektroschrankherstellerbereich eingesetzt werden sollen oder in einer Vielzahl von Anwendungen im Automobil- und Flugzeugbau. Dazu sind die typischen antistatisch ausgerüsteten Kunststoffe, die im Wesentlichen die Verwendung innerer Antistatika, wie Fettaminethoxylaten oder Glycerin bzw. Polyglycerinen aufweisen oder auch das Aufsprühen von äußeren Antistatikalösungen, die auf der Kunststoffoberfläche auftrocknen, wie z.B. Ammonium- oder Alkalimetallsalzlösungen nicht ausreichend.

Eine allgemein angewandte Methode, das Ableiten von Ladungen zu ermöglichen und die statische Aufladung zu minimieren, ist der Einsatz von Antistatika, d. h. nichtionischen oder ionischen grenzflächenaktiven Verbindungen und insbesondere Ammonium- und Alkalimetallsalzen.

Heute werden im Wesentlichen äußere und/oder innere Antistatika eingesetzt. Äußere Antistatika werden als wässrige oder alkoholische Lösungen durch Sprühen, Aufstreichen oder Tauchen und anschließender Lufttrocknung auf die Oberfläche der Kunststoffe aufgetragen. Der verbleibende antistatische Film ist auf fast allen Kunststoffen wirksam, hat aber den Nachteil, dass er durch Reibung oder Flüssigkeit sehr leicht und ungewollt wieder entfernt wird.

Aufgrund des fehlenden Depoteffektes der aus dem Inneren der Polymermasse nachmigrierenden Antistatikamoleküle (wie bei den inneren Antistatika vorhanden), weisen externe Antistatika keine Langzeitwirkung auf.

Daher werden vorzugsweise innere Antistatika verwendet, welche der Polymermasse soweit als möglich in reiner Form, ansonsten in Form so genannter "master-batches", d.h. konzentrierten Formulierungen, vor oder während der Verarbeitung zugesetzt werden und darin während des Injektions- oder Extrusionsprozesses homogen verteilt werden.

Die EP 2 038 337 referiert Polymerzusammensetzungen aus Polymeren und ionischen Flüssigkeiten und Metallsalzen, die zusammen mit Glykolen als Lösungsmittel und Lösungsvermittlern antistatische Eigenschaften der Polymerzusammensetzungen bewirken können. Kohlenstoffsubstrate werden hier nicht verwendet.

Auch die EP 1519 988 beschreibt Polymerzusammensetzungen aus Polymeren zusammen mit ionischen Flüssigkeiten und deren antistatische Wirkung. Kohlenstoffsubstrate oder auch Metallsalze werden hier nicht verwendet.

Nachteilig ist bei beiden Veröffentlichungen, dass nur geringe Anteile an Antistatikum in das Polymer eingebracht werden können, wenn die mechanischen Eigenschaften der Polymere nicht nachteilig beeinflusst werden sollen.

Typische Thermoplaste weisen spezifische Oberflächenwiderstände im Bereich von 10¹⁶ bis 10¹⁴ Ohm(Ω) auf und können daher Spannungen von bis zu 15.000 Volt aufbauen. Wirksame Antistatika können die spezifischen Oberflächenwiderstände der Kunststoffe auf 10¹⁰ bis 10⁹ Ohm abbauen. Ein deutlich höheres Niveau für die Ableitung von elektrischen Ladungen muss hingegen erzielt werden, wenn Kunststoffe in elektronischen Bauteilen von Großgeräten wie z.B. im Trafo- oder Elektroschrankherstellerbereich eingesetzt werden sollen oder in einer Vielzahl von Anwendungen im Automobil- und Flugzeugbau. Hier müssen elektrisch leitfähige Formmassen eingesetzt werden, die einen spezifischen Oberflächenwiderstand von weniger als 10⁹ Ohm aufweisen müssen. Entscheidend ist darüber hinaus, dass in derartigen Kunststoffanwendungen nicht nur der Oberflächenwiderstand, sondern auch der Durchgangswiderstand durch Kunststoffteile mit einer Dicke bis zu mehreren Millimeter in einem ebensolchen Bereich liegen muss und sich bei Teilen, die mittels Spritzguss hergestellt werden, häufig Anisotropieeffekte ausbilden, die generell schwierig zu unterbinden sind.

Für die Fertigung von leitfähigen Kunststoffformteilen gibt es daher nur die Möglichkeit, entweder bereits leitfähige Kunststoffe wie Polyaniline u. ä. zu verwenden oder die zuvor genannten und als elektrische Isolatoren zu charakterisierenden Kunststoffe durch die Verwendung von Rußen, insbesondere Leitfähigkeitsrußen, Kohlenstofffasem, Graphit, Graphen und/oder CNTs leitfähig zu machen.

Leitfähige Ruße sind dabei fraktale Strukturen, die durch gegenseitige Berührung in der Lage sind, die elektrische Ladung im Polymer weiterzuleiten und auch einen niedrigen Durchgangswiderstand zu garantieren. Dazu sind im Allgemeinen hohe Füllgrade zwischen 15 und 25 Gew.-% erforderlich, die nicht nur die technischen Polymereigenschaften besonders in Hinsicht auf die mechanischen Kennzahlen wie Kerbschlagzähigkeit oder Zugfestigkeit negativ beeinflussen, sondern auch eine ungenügende Oberflächengüte für Bauteile im sichtbaren Bereich bewirken, die von der Industrie bemängelt wird.

Als Leitfähigkeitsruße werden spezielle Industrieruße bezeichnet, die unter anderem durch das Fumace-Ruß-Verfahren oder durch thermische Spaltung mittels Acetylen-Ruß-Verfahren hergestelltwerden. Ihr DBP(Dibutylphthalat)-Wert liegt dabei über 110 ml je 100 g Ruß mit einer extrem hohen spezifischen Oberfläche. Typische Handelsprodukte sind z. B. Akzo Ketjenblack EC oder auch Evonik Printex XE2 oder Printex L6.

Im Vergleich dazu können zwar Kohlenstofffasern oder Carbon Nanotubes (CNTs) und speziell Graphen in deutlich geringeren Konzentrationen eingesetzt werden, doch ist ihre Dispergierung extrem prozessabhängig. Beispielsweise ist es entscheidend für die spätere Wirksamkeit, wie die CNTs im Bereich der Eingabe/des Feedings in die Extrusionsschnecke eingebracht werden und welche Schneckenkonfiguration in einem Extrusionsprozess gewählt wird. Dies sind nur einige relevante Prozessparameter, die einer beliebig einfachen Nutzung entgegen sprechen. Weiterhin liegen die Kosten der Kohlenstofffasem oder CNT's erheblich über dem Preis von leitfähigen Rußen - Graphen ist noch deutlich teurer -, so dass sofort deutlich wird, dass hier ein weiterer Optimierungsbedarf in der Absenkung der Kohlenstofffaser- oder CNT-Konzentration liegt. In einigen Kunststoffen ist darüber hinaus die Dispergierung dieser Produkte besonders schwierig, da die Schmelzviskosität und die Polarität einiger Thermoplaste dem entgegen wirken.

Carbon Nanotubes sind neben Graphit, Diamant, amorphem Kohlenstoff und Fullerenen eine weitere Modifikation des Elements Kohlenstoff. Die Kohlenstoffatome sind dabei in Sechsecken angeordnet. Die Struktur entspricht einer aufgerollten einatomigen oder mehratomigen Schicht von Graphit, so dass ein Hohlzylinder mit typischerweise wenigen Nanometern Durchmessern und bis zu einigen Millimetern Länge entsteht. Man unterscheidet grundsätzlich mehrwandige und einwandige Kohlenstoff-Nanoröhren, in der Literatur meist auch MWNTs und SWNTs (aus dem Englischen: multi walled nanotubes und single walled nanotubes) abgekürzt. Kohlenstoff-Nanoröhren zeigen aufgrund von Van-der-Waals-Kräften eine starke Tendenz, sich zu Bündeln zu vereinigen, weshalb die Entknäuelung/Dispergierung ohne starkes Verkürzen durch starke Scherkräfte im Extrusionsprozess essentiell ist. Typische Handelsprodukte sind von verschiedenen Herstellern erhältlich, wovon hier stellvertretend die Firmen Bayer, Cyclics (früher Electrovac), Nanocyl und Arkema mit ihren Grades Baytubes^{®} C150P, Baytubes^{®}C 150 HP, Baytubes^{®} C 70P, Electrovac HTF 110 FF, Nanocyl™ NC 7000 und Graphistrength C100 genannt werden sollen. Weitere Hersteller bieten CNTs in Form von Masterbatches an, beispielsweise Hyperion und C-Polymers.

Metallsalze sind bekannte und wirksame Antistatika. Sie haben jedoch den Nachteil, dass sie zur homogenen Verteilung in Kunststoffen vor der Anwendung gelöst werden müssen. Übliche Lösungsmittel sind Alkohole, Ether, Ester, Polyether, cyclische Ether, cyclische Ester, Amide, cyclische Amide, aromatische Verbindungen oder ganz allgemein organische Lösungsmittel. Die Löslichkeit der Metallsalze ist jedoch zum Teil sehr gering, so dass für ausreichend wirksame Einsatzkonzentrationen große Mengen an Lösungsmittel verwendet werden müssen.

Solche Lösungsmittelmengen als Zusatzstoffe in den Polymerzusammensetzungen sind weder in großen noch in kleinen Mengen sicherheitstechnisch in Extrusionsprozessen beim Aufschmelzen der Thermoplaste und dem Einarbeiten der leitfähigen kohlenstoffbasierten Produkte möglich zu verarbeiten, noch wären sie hinsichtlich der resultierenden weichmachenden Eigenschaften für die mechanischen Parameter der Polymerzusammensetzungen zu akzeptieren, da zwar eine Abweichung von mechanischen Kennzahlen tolerierbar ist, diese aber im Allgemeinen nicht mehr als 10% unterhalb des Ausgangswertes des gefüllten Polymers ohne Verwendung der Additive - hier beispielsweise des Metallsalzes zusammen mit dem dafür notwendigen Lösungsmittel - liegen darf.

Sofern derartige Antistatikaformulierungen in Kunststoffen eingesetzt werden, haben sie den Nachteil, dass sie die optischen und vor allem die physikalischen Eigenschaften des Endproduktes nachteilig beeinflussen.

In der Praxis bestand daher der Bedarf die Dispergierung von elektrisch leitfähigen Rußen, Kohlenstofffasern, Graphit, Graphen und/oder CNTs zu verbessern, so dass Formteile zu fertigen sind, die eine glatte Oberfläche aufweisen und/oder bei niedrigerem Gehalt der vorgenannten Inhaltsstoffe ein niedrigerer Oberflächen- und Durchgangswiderstand aufweisen bzw. bei gleichem Gehalt ein noch niedrigerer Oberflächen- und Durchgangswiderstand gewährleistet werden kann.

Derartige Kunststoff-Formmassen müssen häufig elektrisch dissipativ bzw. antielektrostatisch oder elektrisch leitfähig eingestellt sein, wobei derzeit folgende Anwendungen im Vordergrund stehen:
- Verhinderung von statischer Aufladung z. B. bei Verpackungen, bei Dosiersystemen für Aerosole, Pulver oder Flüssigkeiten, bei Kraftstoffleitungen und z. B. bei Elektronikbauteilen wie Chipträgern, wo aus Sicherheitsgründen die elektrostatische Aufladung verhindert werden muss,
- elektromagnetische Abschirmung von elektrischen Geräten und elektronischen Baugruppen, z. B. in der Kfz-, EDV-, Nachrichten- und Kommunikationstechnik, sowie
- Nutzung der elektrischen Leitfähigkeit, z. B. Potentialsteuerung im Kabel, stromabhängige Schaltelemente, Heizelemente oder für die elektrostatische Lackierung von Kunststoffteilen. Die elektrostatische Lackierung hat sich in den letzten Jahren in sehr vielen Bereichen, insbesondere in der Kfz-Industrie, durchgesetzt. Grundvoraussetzung der elektrostatischen Lackierung ist die Möglichkeit, elektrische Ladungen auf die zu lackierenden Formteile aufbringen zu können. Dies ist bei Metallen leicht, bei üblichen Thermoplasten wegen deren geringer Leitfähigkeit aber normalerweise nicht in ausreichendem Maße möglich.

Bei der Compoundierung von Polymeren mit leitfähigen Füllstoffen treten jedoch häufig Agglomerate nicht vollständig dispergierter Füllstoffe auf, die die Produktqualität der Zusammensetzung einschränken. Beispielsweise können solche Agglomerate zu Oberflächendefekten führen, die für die Anwendung nicht tolerierbar sind. Zudem wird bei gegebener Konzentration an leitfähigem Füllstoff die maximal erreichbare Leitfähigkeit bei weitem nicht erreicht.

Die Beurteilung der Dispergiergüte kann zum Beispiel über lichtmikroskopische Untersuchungen an Dünnschnitten erfolgen, wobei die Flächenanteile der Agglomerate erfasst werden.

Es bestand vor diesem Hintergrund die Aufgabe, die Dispergierung von elektrisch leitfähigen Füllstoffen in den genannten Polymeren zu verbessem. In einem Aspekt der Aufgabe sollte die Oberflächenqualität der Formmasse auf diese Weise verbessert werden. In einem weiteren Aspekt der Aufgabe sollte bei einem gegebenen Gehalt an elektrisch leitfähigem Füllstoff die elektrische Leitfähigkeit verbessert werden bzw. zur Erzielung einer gewünschten Leitfähigkeit ein geringerer Füllstoffgehalt erforderlich sein.

Überraschenderweise wurde nun gefunden, dass bestimmte Dispergiermittel als Additive in den Polymeren in Kombination mit Salzen mit einem nichtmetallischen Kation diese Aufgabe zu lösen vermögen. Sehr polare Strukturen auf Basis von Estern oder Amiden als Dispergiermittel können mit den völlig unpolaren kohlenstoffbasierten Zusätzen selbst in unpolaren Polymeren diese Aufgabe überraschenderweise erfüllen.

Diese Aufgabe wurde dadurch gelöst, dass bestimmte Additive zugesetzt werden, um eine Verbesserung der Dispergierung zu erzielen.

Gegenstand der Erfindung sind somit Polymerzusammensetzungen, die folgende Komponenten enthalten:
a) mindestens 40 Gew.-Teile, vorzugsweise mindestens 50 Gew.-Teile und besonders bevorzugt mindestens 60 Gew.-Teile eines Polymers, das ausgewählt ist aus der Gruppe der Polymere umfassend:
   a1) Thermoplaste, insbesondere lineare oder verzweigte Polymere oder (teil)kristalliner Thermoplaste, thermoplastische Elastomere, lineare oder thermolabil vernetzten Polymermoleküle, wobei die Thermoplaste vorzugsweise ausgewählt sind aus Polyolefinen, Polypropylen oder Polyethylen, Polystyrol, Vinylpolymeren, Polyestem, Polyetherpolyolen, Polyacetaten, wie beispielsweise Polyvinylacetat, Polyacetale, Polycarbonate, thermoplastischen Polyurethanen und lonomere aber auch TPEs - thermoplastische Elastomere-, oder auch spezielle Polyamide, deren Monomereinheiten im Mittel weniger als 7,5 C-Atome enthalten, wie z. B. PA46, PA6, PA66, CoPA6/66, Polyphthalamide auf Basis von Terephthalsäure und/oder Isophthalsäure sowie Hexamethylendiamin und/oder 2-Methylpentandiamin und gegebenenfalls solche, die Caprolactam oder Hexamethylendiamin/Adipinsäure oder deren Derivate als Comonomere enthalten können, wobei die Polymere allein oder in beliebigen Mischungen oder als Co-Polymere eingesetzt werden können, und
   a2) Duroplaste, insbesondere solche, die durch irreversible und engmaschige Vernetzung über kovalente Bindungen aus Oligomeren (technisch: Prepolymeren), seltener aus Monomeren oder Polymeren erhalten werden, wobei die Duroplaste vorzugsweise ausgewählt sind aus der Gruppe umfassend amorphe Harze, Diallylphthalat-Harze (DAP), Epoxidharze (EP), Hamstoff-Formaldehyd-Harze (UF), Melamin-Formaldehyd-Harze (MF), Melamin-Phenol-Formaldehyd-Harze (MPF), Phenol-Formaldehyd-Harze und/oder ungesättigten Polyesterharze (UPES), wobei die Polymere allein oder in beliebigen Mischungen oder als Co-Polymere eingesetzt werden können, wobei die Thermoplaste und Duroplaste alleine oder in beliebigen Mischungen eingesetzt werden können,
   mit der Maßgabe, dass das Polymer a) kein Polyamid ist, dessen Monomereinheiten im arithmetischen Mittel mindestens 7,5 C-Atome aufweist und insbesondere kein Polyamid 12 ist,
b) 0,1 bis 15 Gew.-Teile, vorzugsweise 1 bis 12 Gew.-Teile und besonders bevorzugt 2,5 bis 10 Gew.-Teile mindestens eines Salzes mit einem nichtmetallischen Kation
c) 0,1 bis 25 Gew.-Teile, vorzugsweise 0,5 bis 25 Gew.-Teile, mehr bevorzugt 1 bis 20 Gew.-Teile und besonders bevorzugt 2 bis 15 Gew.-Teile mindestens eines Dispergiermittels auf Basis von Estern oder Amiden sowie
d) einem elektrisch leitfähigen Kohlenstoff, ausgewählt aus der Gruppe Ruß, Graphitpulver, Kohlenstofffasern, Carbon Nanotubes und/oder Graphen, in einer Menge, die in der Polymerzusammensetzung einen spezifischen Oberflächenwiderstand gemäß IEC 60167 von 10⁻¹ bis 10¹⁰Ω, vorzugsweise 10⁰ Ω bis 10⁸ Ω und besonders bevorzugt von 10⁻¹ Ω bis 10⁶ Ω ergibt, bevorzugt sind unter 20 Gew.-Teile eines elektrisch leitfähigen Kohlenstoffs.

Vorzugsweise besteht die Komponente a) der erfindungsgemäßen Polymerzusammensetzung aus einem oder mehreren der unter a1) bzw. a2) genannten Thermoplasten und/oder Duroplasten.

Die Polymerzusammensetzung kann darüber hinaus optional
e) 0 bis 5 Gew.-Teile, vorzugsweise 0,1 bis 3 Gew.-Teile und besonders bevorzugt 0,1 bis 2 Gew.-Teile mindestens eines Metallsalzes sowie
f) übliche Hilfs- und Zusatzstoffe enthalten,
wobei die Summe der Gewichtsteile der Komponenten a) bis f) 100 beträgt.

In einer möglichen Ausführungsform enthält die Polymerzusammensetzung
- 0,1 bis 10 Gew.-Teile, bevorzugt 0,5 bis 5 Gew.-Teile und besonders bevorzugt 1 bis 3,5 Gew.-Teile der Komponente b),
- 1 bis 10 Gew.-Teile, bevorzugt 1,5 bis 8 Gew.-Teile und besonders bevorzugt 2 bis 5 Gew.-Teile der Komponente c),
- 1 bis 10 Gew.-Teile, bevorzugt 2 bis 8 Gew.-Teile und besonders bevorzugt 2,5 bis 6 Gew.-Teile Carbon Nanotubes als Komponente d) sowie
- 0 bis 5 Gew.-Teile, bevorzugt 0,1 bis 4 Gew.-Teile und besonders bevorzugt 0,5 bis 3 Gew.-Teile der Komponente e),
wobei auch hier die Summe der Gewichtsteile der Komponenten a) bis f) 100 beträgt.

In einer weiteren möglichen Ausführungsform besitzt die Polymerzusammensetzung darüber hinaus einen spezifischen Durchgangswiderstand gemäß IEC 60093 von maximal 10⁹ Ωm (Ohm*m), vorzugsweise von 10⁻³ Ωm bis 10⁷ Ωm und besonders bevorzugt von 10⁻¹ Ωm bis 10⁵ Ωm.

Für gewöhnlich werden in thermoplastischen Kunststoffanwendungen Stearate oder Wachse als Dispergiermittel verwandt, zumindest in den bei niedrigeren Temperaturen (160°C bis 220°C) verarbeiteten Polyolefinen. Stearate und Polyolefinwachse auf Basis von PE, PP oder EVA (Ethylenvinylacetat) sind aber als thermisch labile Inhaltsstoffe anzusehen, da sie bereits bei Temperaturen von unter 200°C einen Gewichtsverlust, ermittelt mittels Thermogravimetrie, im Bereich von mehr als 10 Gew.-% aufweisen können. Darüber hinaus zeigen gerade Stearate noch den zusätzlichen Nachteil, dass sie durch Zersetzung verkrustete Ablagerungen auf den heißen Innenteilen des Extruders und der Schnecke bilden, die dann entweder zu schwierigen Reinigungsvorgängen und Maschinenverlustzeiten führen oder solche durch plötzliches Mitreißen im Extrusionsstrom der Verkrustungen zu Inhomogenitäten führen, die nicht wieder Aufschmelzen und zu Verblockung des Extruders am Ausgang/am Die (sogenanntes Die Drol Phänomen) führen. Darüber hinaus führen solche Verblockungen letztendlich auch zu gestörten Oberflächen in den gespritzten Teilen.

Die Thermolabilität solcher Dispergiermittel ist wegen der hohen Füllgrade mit kohlenstoffbasierten Produkten besonders kritisch, da die Wärmeabführung im Inneren der Extrusion sich schwieriger gestaltet als bei gewöhnlichen Masterbatch-und Compoundierprozessen. Ursache dafür sind die hohen Oberflächen, die vorstehend im Text schon durch die Charakterisierung solcher kohlenstoffbasierten Oberflächen mittels des DBP-Wertes erklärt wurden.

Es kann bei der thermischen Zersetzung oder auch beim Aufbrennen von Teilen der Polymerzusammensetzungen auf die inneren Teile der Schnecke bis zum Stehenbleiben und ggf. sogar Abreißen der Schneckenschäfte des Extruders kommen. Mit Wachsen, die zwar eher viskositätssenkend wirken, versucht man dies zwar zu verhindern, aber häufig kommt es dabei zu einer Überlubrifizierung und die Kunststoffzusammensetzungen verlassen die Compoundierung/Extrusion faktisch so schnell, dass keine ausreichende Dispergierung der kohlenstoffbasierten Inhaltsstoffe erfolgt, was dann wiederum an den ungenügenden Werten der Reduzierung des Oberflächen- bzw. Durchgangswiderstandes deutlich wird.

In den technischen Polymeren, die Verarbeitungstemperaturen von 200°C bis 400°C benötigen, sind diese thermolabilen Dispergiermittel daher nicht einsetzbar.

In den klassischen, bekannten duroplastischen Polymerzusammensetzungen werden entweder keine oder andersartige Dispergiermittel als in den thermoplastischen verwandt. Die Limitierung der eingesetzten Dispergiermittel liegt hier weniger in der Diskussion der Thermolabiltät, sondern vielmehr in der unzureichenden Absenkung der Viskosität, um ausreichende Mengen an kohlenstoffbasierten Inhaltsstoffen für eine entsprechende antistatische Wirkung oder Leitfähigkeit einzubringen. Typische Dispergiermittel, die dort genutzt werden, sind z.B. Polyurethane oder auch spezielle polyetherbasierte Strukturen. So wird beispielsweise in ungesättigten Polyesterharzen mit signifikanten Zusätzen an Styrol gearbeitet, die jedoch partiell vor der Aushärtung des duroplastischen Systems verdunsten und damit auch gesundheitsschädlich sind. Die vorgenannten Dispergiermittel zeigen hier keine ausreichende Viskositätssenkung, die zur Dispergierung in der kontinuierlichen Phase erforderlich ist, um Scherkräfte, die eine Dispergierung erlauben, einzubringen, wenn ein Hochgeschwindigkeitsrührer z.B. von der Firma Getzmann genutzt wird. Da solche duroplastischen Systeme z.B. gegossen werden, um z.B. im Flugzeug- oder Automobilbereich antistatisch ableitende Oberflächen zu garantieren, ist die Absenkung der Viskosität auch ein applikationstechnischer Parameter, der sich in einer ungenügenden Oberflächengüte zeigen kann.

Die erfindungsgemäß als Komponente b) verwendeten Salze mit einem nichtmetallischen Kation setzen sich vorzugsweise aus mindestens einer quartären Stickstoff- und/oder Phosphorverbindung und mindestens einem Anion zusammen, wobei das Kation besonders bevorzugt ausgewählt ist aus der Gruppe der substituierten Ammonium-, Phosphonium-, Pyridinium-, Imidazolinium- und/oder Imidazolium-Kationen und insbesondere bevorzugt aus der Gruppe der acyclischen quartemären Ammonium-, 1,3-Dialkylimidazolium-, 1,2,3-Trialkylimidazolium-, 1,3-Dialkylimidazolinium- und/oder 1,2,3-Trialkylimidazoliniumkationen, wobei sich die unterschiedlichen Ladungen der Kationen und Anionen insgesamt jeweils ausgleichen.

Als Salze mit einem nichtmetallischem Kation können erfindungsgemäß die nachfolgenden Verbindungen verwendet werden.

Die Art der Anionen im Salz der Komponente b) ist unkritisch. Die Anionen sind ausgewählt aus der Gruppe der Halogenide, Carboxylate, Phosphate, Thiocyanate, Isothiocyanate, Dicyanamid, Sulfate, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Sulfonate, Tetrafluoroborate, Hexafluoro-phosphate, Bis(perfluoralkylsulfonyl)amide oder - imide, Bis(trifluormethylylsulfonyl)imid, Alkyl- und Aryltosylate, Perfluoralkyltosylate, Nitrate, Alkyl- und Arylcarboxylate, Perfluoralkylcarboxylate, Perchlorat, Tetrachloroaluminat, Saccharinat, Dicyanamid, Thiocyanat, Isothiocyanat, Tetraphenylborat, Tetrakis(pentafluorphenyl)borat, Tetrafluoroborat, Hexafluorophosphat, Polyetherphosphate und/oder Phosphat die mit Kationen von quartären Stickstoff- und/oder Phosphorverbindungen, bevorzugt ausgewählt aus der Gruppe der substituierten Ammonium-, Phosphonium-, Pyridinium-, Imidazolinium- und/oder Imidazolium-Kationen kombiniert werden und insbesondere bevorzugt von acyclischen quarternären Ammonium- oder 1,3-Dialkylimidazolium-, 1,2,3-Trialkylimidazolium-, 1,3-Dialkylimidazolinium- und/oder 1,2,3-Trialkylimidazoliniumkationen,

wobei sich die Ladungen innerhalb der Anion-Kation-Kombinationen ausgleichen und wobei auch Mischungen unterschiedlicher Salze eingesetzt werden können. Die in den erfindungsgemäßen Polymerzusammensetzungen bevorzugt eingesetzten Salze mit einem nichtmetallischem Kation bestehen aus mindestens einem Kation der allgemeinen Formeln:

R¹R²R³R⁴N⁺ (1)

R¹R²N⁺=CR³R⁴ (2)

R¹R²R³R⁴P⁺ (3)

R¹R²P⁺=CR³R⁴ (4)

in denen
- R¹, R², R³, R⁴: gleich oder verschieden sein können und Wasserstoff, einem linearen oder verzweigten oder Doppelbindungen enthaltenden aliphatischen Kohlenwasserstoffrest mit 1 bis 30 Kohlenstoffatomen oder einen gesättigten oder ungesättigten gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome enthaltenden Rest wie Sauerstoff, -NH-, -NR'-unterbrochenen linearen oder verzweigten gegebenenfalls ungesättigten aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)- -S(O₂)-NH-, -NH-S(O₂)-, -S(O₂)-N(CH₃)-, -N(CH₃)-S(O₂)-, unterbrochenen linearen oder verzweigten oder auch Doppelbindungen enthaltenden aliphatischen Kohlenwasserstoffrest mit 2 bis 30 Kohlenstoffatomen, einen endständig -OH, -OR', -NH₂, -N(H)R', -N(R')₂ funktionalisierten linearen oder verzweigten oder auch Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R⁵-O)ₙ-R⁶ bedeutet, wobei
- R': gleich einem gesättigten oder ungesättigten C₁-C₃₀-Alkylrest, insbesondere -CH₃ ist,
- R⁵: ein 2 bis 4 Kohlenstoffatome enthaltender linearer oder verzweigter Kohlenwasserstoffrest,
- n: 1 bis 100, vorzugsweise 2 bis 60, ist und
- R⁶: Wasserstoff, einen linearen oder verzweigten oder Doppelbindungen enthaltenden aliphatischen Kohlenwasserstoffrest mit 1 bis 30 Kohlenstoffatomen, oder einen Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit
- R⁷: gleich einem linearen oder verzweigten oder auch Doppelbindungen enthaltenden aliphatischen Kohlenwasserstoffrest mit 1 bis 30 Kohlenstoffatomen oder gleich einem Doppelbindungen enthaltenden cycloaliphatischen Kohlenwasserstoffrest mit 5 bis 40 Kohlenstoffatomen oder gleich einem aromatischen Kohlenwasserstoffrest mit 6 bis 40 Kohlenstoffatomen oder gleich einem Alkylarylrest mit 7 bis 40 Kohlenstoffatomen ist.

Als Kationen kommen ferner Ionen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5- bis 6-gliedrigen heterocyclischen Ring ableiten, der weiter substituiert sein kann. Solche Kationen lassen sich vereinfacht (d. h. ohne Angabe von genauer Lage und Zahl der Doppelbindungen im Molekül) durch die nachstehenden allgemeinen Formeln (5), (6) und (7) beschreiben, wobei die heterocyclischen Ringe gegebenenfalls auch mehrere Hetereoatome enthalten können 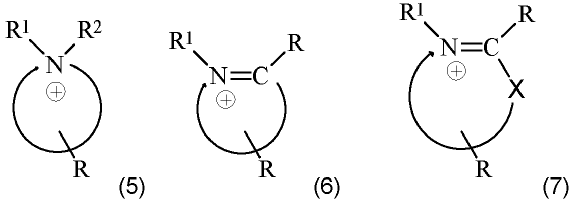 und worin die Substituenten die folgende Bedeutung haben
- R: ist ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen.
- R¹ und R²: besitzen dabei die bereits vorgenannte Bedeutung,
- X: ist ein Sauerstoffatom, ein Schwefelatom oder ein substituiertes Stickstoffatom NR^{1a}
- R^{1a}: Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀-Alkylrest, insbesondere -CH₃) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', NH₂, N(H)R', N(R')₂ (mit R' gleich einem gegebenenfalls Doppelbindungen enthaltenden C₁-C₃₀-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R⁵-O)ₙ-R⁶ bedeuten.

Cyclische Kationen basieren beispielsweise auf den Stickstoffverbindungen der vorgenannten Art wie Pyrrolidin, Dihydropyrrol, Pyrrol, Imidazolin, Oxazolin, Oxazol, Thiazolin, Thiazol, Isoxazol, Isothiazol, Indol, Carbazol, Piperidin, Pyridin, die isomeren Picoline und Lutidine, Chinolin und iso-Chinolin. Die cyclischen Stickstoffverbindungen der allgemeinen Formeln (5), (6) und (7) können unsubstituiert (R = H), einfach oder auch mehrfach durch den Rest R substituiert sein, wobei bei einer Mehrfachsubstitution durch R die einzelnen Reste R unterschiedlich sein können.

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4- bis 10-, vorzugsweise 5- bis 6-gliedrigen heterocyclischen Ring ableiten. Diese Verbindungen können sowohl an den Kohlenstoffatomen als auch an den Stickstoffatomen substituiert sein. Sie können ferner durch, gegebenenfalls substituierte, Benzolringe und/oder Cyclohexanringe unter Ausbildung mehrkerniger Strukturen aneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, Pyridazin, Pyrimidin, 2,3-, 2,5- und 2,6-Dimethylpyrazin, Cimolin, Phthalazin, Chinazolin, Phenazin und Piperazin. Insbesondere vom Imidazol und seinen Alkyl- und Phenylderivaten abgeleitete Kationen der allgemeinen Formel (8) haben sich als Bestandteil der Salze mit nichtmetallischen Kationen bewährt.

Als Kationen kommen ferner Ionen in Betracht, welche zwei Stickstoffatome enthalten und durch die allgemeine Formel (8) wiedergegeben sind 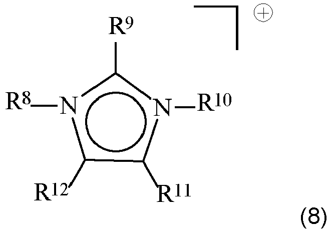 in denen
- R⁸,R⁹,R¹⁰,R¹¹,R¹²: gleich oder unterschiedlich sind und Wasserstoff, einen linearen oder verzweigten gegebenenfalls Doppelbindungen enthaltenden aliphatischen Kohlenwasserstoffrest mit 1 bis 30, vorzugsweise 1 bis 8, insbesondere 1 bis 4 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀-Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)-, S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', NH₂, N(H)R', N(R')₂ mit R' gleich einem gegebenenfalls Doppelbindungen enthaltenden C₁-C₃₀-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -(R⁵-O)ₙ-R⁶ bedeuten,
wobei
- R⁵: ein 2 bis 4 Kohlenstoffatome enthaltender Kohlenwasserstoffrest,
- n: 1 bis 100 ist und
- R⁶: Wasserstoff, einen linearen oder verzweigten gegebenenfalls Doppelbindungen enthaltenden aliphatischen Kohlenwasserstoffrest mit 1 bis 30 Kohlenstoffatomen einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit

- R⁷: gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Erfindungsgemäß bevorzugt sind solche Salze mit einem nichtmetallischen Kation bzw. deren Mischungen, die eine Kombination eines 1,3-Dialkylimidazolium-, 1,2,3-Trialkylimidazolium-, 1,3-Dialkylimidazolinium- und/oder 1,2,3-Trialkylimidazoliniumkations mit einem Anion ausgewählt aus der Gruppe der Halogenide, Bis(trifluormethylylsulfonyl)imid, Perfluoralkyltosylate, Alkylsulfate und -sulfonate, perfluorierte Alkylsulfonate und -sulfate, Perfluoralkylcarboxylate, Perchlorat, Dicyanamid, Thiocyanat, Isothiocyanat, Tetraphenylborat, Tetrakis(pentafluorphenyl)borat, Tetrafluoroborat und/oder Hexafluorophosphat darstellen. Darüber hinaus können auch einfache, kommerziell erhältliche, acyclische quartemäre Ammoniumsalze wie z.B. Ethyl-bis(polyethoxyethanol)-talgalkylammoniumethylsulfat, Methyl-bis(pentaethoxyethanol)cocosammoniummethylsulfat, 1-Butyl-3-methylimidazoliumthiocyanat, 1-Ethyl-3-methylimidazoliumbromid, 1,3-Dimethylimidazoliummethylsulfat, 1-Ethyl-3-methylimidazoliumethylsulfat, Bis(2-hydroxyethyl)-dimethylammoniummethansulfonat (Produkte der Evonik Goldschmidt GmbH) oder auch Rezol Heqams eingesetzt werden.

Überraschenderweise wurde nun gefunden, dass spezielle ester- und amidbasierte Dispergiermittel (Komponente (c)) die aufgezeigten Nachteile nicht zeigen und in der Thermographie (TGA) einen deutlich geringeren Gewichtsverlust als die typischen Wachse oder Stearate erleiden, der selbst bei 280°C unter 10% liegt. Weiterhin zeigen sie keine negative Beeinflussung der Oberflächengüte und erlauben beträchtliche Mengen an kohlenstoffbasierten Substraten in thermoplastische als auch duroplastische Polymere einzubringen um antistatische oder sogar leitfähige Eigenschaften zu bewirken.

Das Dispergiermittel der Komponente c) kann beispielsweise aus folgenden Substanzklassen ausgewählt sein:
c1) Polyacrylsäureester, herstellbar durch Umesterung eines durch Polymerisation erhältlichen Polyacrylsäurealkylesters, dessen Alkylreste 1 bis 3 Kohlenstoffatome aufweisen und der vorzugsweise eine Molmasse von 1.000 - 10.000 g/mol und besonders bevorzugt von 2.000 - 5.000 g/mol besitzt, mit
   a) gesättigten aliphatischen Alkoholen mit 4 bis 50 und bevorzugt 8 bis 30 Kohlenstoffatomen und/oder
   b) ungesättigten aliphatischen Alkoholen mit 4 bis 50 und bevorzugt 8 bis 30 Kohlenstoffatomen,
wobei das molare Verhältnis der Alkoholkomponenten a) und b) 1 : 0 bis 0 : 1, bevorzugt 0,75 : 0,25 bis 0,25 : 0,75 und besonders bevorzugt 0,6 : 0,4 bis 0,4 : 0,6 beträgt und die Komponenten a) und/oder b) in solchen Mengen verwendet werden, dass 30 bis 100 % und bevorzugt 70 bis 100 % der Estergruppen umgeestert werden.

In einer bevorzugten Ausführungsform sind mindestens 25 % der Estergruppen kurzkettig mit 1 bis 4 Kohlenstoffatomen im Alkoholanteil und mindestens 25 %, besonders bevorzugt mindestens 30 % und insbesondere bevorzugt mindestens 40 % der Estergruppen langkettig mit 10 bis 50 Kohlenstoffatomen im Alkoholanteil. Hierbei sind Laurylreste, Oleylreste und Stearylreste bevorzugt.

Neben den genannten Alkoholen können, falls gewünscht, auch andere Alkohole bei der Umesterung mit eingesetzt werden, etwa Polyoxyalkylenmonoole und/oder Dialkylaminoalkanole, wie sie in der EP 0 751 171 A2 beschrieben sind.

Geeignete Produkte sind beispielsweise unter den Bezeichnungen TEGOMER^{®} DA 100N und TEGOMER^{®} DA 102 oder in pulverförmiger Form als TEGOMER^{®} P121 erhältlich (Evonik Goldschmidt GmbH) kommerziell erhältlich.
c2) Polyester-Polyamin-Kondensationsprodukte, erhältlich durch die teilweise oder vollständige Umsetzung von
   A) einem oder mehreren aminofunktionellen Polymeren, das mindestens vier Aminogruppen enthält, mit
   B) einem oder mehreren Polyestem der allgemeinen Formeln (I) oder (Ia)

      T-C(O)-[O-A-C(O)]ₓ-OH (I)

      T-O-[C(O)-A-O-]_{y}-Z (Ia)

      und
   C) einem oder mehreren Polyethem der allgemeinen Formel (II) oder (IIa)

      T-C(O)-B-Z (II)

      T-O-B-Z (IIa)
   worin
   - T: ein Wasserstoffrest und/oder ein gegebenenfalls substituierter, linearer oder verzweigter Aryl-, Arylalkyl-, Alkyl- oder Alkenylrest mit 1 bis 24 Kohlenstoffatomen ist,
   - A: mindestens ein zweiwertiger Rest ist, ausgesucht aus der Gruppe der linearen, verzweigten, cyclischen und aromatischen Kohlenwasserstoffe,
   - Z: mindestens ein Rest ist, ausgesucht aus der Gruppe der Sulfonsäuren, Schwefelsäuren, Phosphonsäuren, Phosphorsäuren, Carbonsäuren, Isocyanate, Epoxide, insbesondere der Phosphorsäure und (Meth)-Acrylsäure,
   - B: ein Rest der allgemeinen Formel (III) ist

   -(CₗH₂ₗO)ₐ-(CₘH₂ₘO)_{b}-(CₙH₂ₙO)_{c}-(SO)_{d}- (III)

   SO = -CH₂-CH(Ph)-O- mit Ph = Phenylrest,
   - a,b,c: unabhängig voneinander Werte von 0 bis 100 sind,
   mit der Maßgabe, dass die Summe aus a + b + c ≥ 0, vorzugsweise 5 bis 35, insbesondere 10 bis 20 ist, mit der Maßgabe, dass die Summe aus a + b + c + d > 0,
   - d: ≥ 0, vorzugsweise 1 bis 5 ist,
   - l,m,n: unabhängig voneinander ≥ 2, vorzugsweise 2 bis 4 ist,
   - x,y: unabhängig voneinander ≥ 2 sind.

Die Reaktionsprodukte können in Form der Amide und/oder der entsprechenden Salze vorliegen. Weist der Molekülteil "Z" eine Mehrfachbindung auf, wie dies beispielsweise bei den Polyethern und den Alkohol gestarteten Polyestern der Fall sein kann, in denen die endständige OH-Gruppe mit einer ungesättigten Säure wie (Meth)acrylsäure verestert wurde, erfolgt die Bindung über eine Michael-Addition der NH-Funktion an die Doppelbindung.

Beispiele für aminofunktionelle Polymere sind aminofunktionelle Polyaminosäuren wie Polylysin von Aldrich Chemical Co.; aminofunktionelle Silicone, welche unter dem Handelsnamen Tegomer^{®} ASi 2122 von der Evonik Degussa GmbH; Polyamidoamine, welche unter dem Handelsnamen Polypox^{®}, Aradur^{®} oder "Starburst^{®}" als Dendrimere von Aldrich Chemical Co.; Polyallylamine und Poly(N-alkyl)allylamine, welche unter den Handelsnamen PAA von Nitto Boseki; Polyvinylamine, welche unter dem Handelsnamen Lupamin^{®} von BASF AG; Polyalkylenimine, wie zum Beispiel Polyethylenimine, welche unter den Handelsnamen Epomin^{®} (Nippon Shokubai Co., Ltd.), Lupasol^{®} (BASF AG); Polypropylenimine, welche unter dem Handelsnamen Astramol^{®} von DSM AG, erhältlich sind. Weitere Beispiele an aminofunktionellen Polymeren stellen die o. g. Systeme durch Vernetzung mit aminreaktiven Gruppen dar. Diese Vemetzungsreaktion erfolgt beispielsweise über mehrfunktionelle Isocyanate, Carbonsäuren, (Meth)acrylate und Epoxiden. Weitere Beispiele sind Poly(meth)acrylatpolymere, die Dimethylaminopropyl(meth)-acrylamid (Evonik Degussa GmbH) oder Dimethylaminoethyl(meth)acrylat (Evonik Degussa GmbH) als Monomere beinhalten.

Es ist dem Fachmann bekannt, dass auch andere aminofunktionelle Polymere möglich sind; diese können ebenfalls eingesetzt werden.

Typischerweise werden aminofunktionelle Polymere mit einem Molekulargewicht von 400 g/mol bis 600.000 g/mol verwandt.

Beispiele für den Rest T sind Alkylreste mit 1 bis 24 Kohlenstoffatomen, wie der Methyl-, Ethyl-, Propyl-, iso-Propyl-, Butyl-, iso-Butyl-, tertiär-Butyl-, Hexyl-, iso-Hexyl-, Octyl-, Nonyl-, iso-Nonyl-, Decyl-, Dodecyl-, Hexadecyl- und Octadecylrest. Beispiele für gegebenenfalls substituierte Aryl-oder Arylalkylreste mit bis zu 24 Kohlenstoffatomen, sind der Phenyl-, Benzyl-, Toluyl- oder Phenethylrest.

Die Polyestergruppen -[O-A-C(O)]ₓ- und -[C(O)-A-O-]_{y}- enthalten durchschnittlich mehr als zwei Estergruppen und weisen ein mittleres Molekulargewicht Mₙ von 100 bis 5.000 g/mol auf. Besonders bevorzugt ist ein Wert von Mₙ = 200 bis 2.000 g/mol.

Eine besonders bevorzugte Ausführungsform der vorliegenden Erfindung ist dadurch gekennzeichnet, dass die Polyestergruppe durch an sich bekannte Verfahren durch ringöffnende Polymerisation mit einem Startermolekül wie T-CH₂-OH oder T-COOH und ein oder mehreren Lactonen, wie zum Beispiel β-Propiolacton, β-Butyrolacton, γ-Butyrolacton, 3,6-Dimethyl-1,4-dioxan-2,5-dion, δ-Valerolacton, γ-Valerolacton, ε-Caprolacton, γ-Caprolacton, 4-Methylcaprolacton, 2-Methylcaprolacton, 5-Hydroxydodecansäurelacton, 12-Hydroxydodecansäurelacton, 12-Hydroxy-9-octadecensäure, 12-Hydroxyoctadecansäure, erhalten wird.

Startermoleküle wie T-COOH - sowie die daraus herstellbaren Fettalkohole T-CH₂-OH - sind vorzugsweise die auf diesem Gebiet bekannten und üblichen einbasischen Fettsäuren auf Basis natürlicher pflanzlicher oder tierischer Fette und Öle mit 6 bis 24 Kohlenstoffatomen, insbesondere mit 12 bis 18 Kohlenstoffatomen, wie Capronsäure, Caprylsäure, Caprinsäure, Laurinsäure, Myristinsäure, Palmitinsäure, Palmitoleinsäure, Isostearinsäure, Stearinsäure, Ölsäure, Linolsäure, Petroselinsäure, Elaidinsäure, Arachinsäure, Behensäure, Erucasäure, Gadoleinsäure, Rapsölfettsäure, Sojaölfettsäure, Sonnenblumenölfettsäure, Tallölfettsäure, welche allein oder in Mischung in Form ihrer Glyceride, Methyl- oder Ethylester oder als freie Säuren eingesetzt werden können, sowie die bei der Druckspaltung anfallenden technischen Mischungen. Geeignet sind prinzipiell alle Fettsäuren mit ähnlicher Kettenverteilung.

Der Gehalt dieser Fettsäuren bzw. Fettsäureester an ungesättigten Anteilen, wird - soweit dies erforderlich ist - durch die bekannten katalytischen Hydrierverfahren auf eine gewünschte Jodzahl eingestellt oder durch Abmischung von voll hydrierten mit nichthydrierten Fettkomponenten erzielt.

Die Jodzahl, als Maßzahl für den durchschnittlichen Sättigungsgrad einer Fettsäure, ist die Jodmenge, welche von 100 g der Verbindung zur Absättigung der Doppelbindungen aufgenommen wird.

Sowohl die Fettsäuren als auch die resultierenden Alkohole können durch Anlagerung von Alkylenoxiden, insbesondere Ethylenoxid und/oder Styroloxid, modifiziert werden.

Beispiele für die Polyetherbausteine von C sind Alkylenoxide wie: Ethylenoxid, Propylenoxid, Butylenoxid, Styroloxid, Dodecenoxid, Tetradecenoxid, 2,3-Dimethyloxiran, Cyclopentenoxid, 1,2-E poxypentan, 2-Isopropyloxiran, Glycidylmethylester, Glycidylisopropylester, Epichlorhydrin, 3-Methoxy-2,2-dimethyloxiran, 8-oxabicyclo[5.1.0]octan, 2-Pentyloxiran, 2-Methyl-3-phenyloxiran, 2,3-Epoxypropylbenzol, 2-(4-Fluorophenyl)oxiran, Tetrahydrofuran, sowie deren reine Enantiomerenpaare oder Enantiomerengemische.

Die Gruppe Z kann aus Additionsprodukten der Carbonsäureanhydriden wie z. B. Bemsteinsäureanhydrid, Maleinsäureanhydrid oder Phthalsäureanhydrid aufgebaut sein.

Das gewichtsmäßige Verhältnis von Polyester zu Polyether im erfindungsgemäßen Dispergierharz liegt zwischen 50 : 1 und 1 : 9, vorzugsweise zwischen 40 : 1 und 1 : 5 und besonders bevorzugt zwischen 30 : 1 und 1 : 1.

Ein geeignetes Polyester-Polyamin-Kondensationsprodukt ist beispielsweise unter der Bezeichnung TEGOMER^{®} DA 626 (Evonik Goldschmidt GmbH) kommerziell erhältlich.

Die flüssigen Dispergiermittel werden entweder für duroplastische Anwendungen in Kombination mit flüssigen Salzen mit einem nichtmetallischen Kation verwandt oder sie können auch in thermoplastischen Anwendungen durch das Einbringen in die Vormischung oder durch die Einbringung mittels einer Flüssigdosierung im ersten Drittel der Extrusionsstrecke zugegeben werden. Gegebenenfalls werden die flüssigen erfindungsgemäß beanspruchten Mischungen dazu in eine beheizbare Pumpe mit beheizbaren Zuleitungen vorgelegt, um eine einfache Pumpbarkeit zu garantieren.

Im Rahmen der Erfindung kann als Komponente d) grundsätzlich jeder Ruß eingesetzt werden; vorzugsweise wird allerdings ein Leitfähigkeitsruß verwendet. Bei erfindungsgemäß eingesetzten Leitfähigkeitsrußen liegt die Primärteilchengröße zwischen 0,005 und 0,2 µm, bevorzugt zwischen 0,01 und 0,1 µm. Die Dibutylphthalat-Adsorption der Leitfähigkeitsruße liegt zwischen 40 und 1.000 ml pro 100 g Ruß, bevorzugt zwischen 90 und 600 ml pro 100 g Ruß. Auf der Rußoberfläche kann sich eine Vielzahl von sauerstoffhaltigen Gruppen, wie zum Beispiel Carboxyl-, Lactol-, Phenolgruppen, chinoide Carbonylgruppen und/oder Pyronstrukturen befinden.

Leitfähigkeitsruße können beispielsweise aus Acetylen, aus Synthesegas oder nach dem Furnace- Process aus Öl, Trägergasen und Luft hergestellt werden. Herstellungsprozesse und Eigenschaften sind beispielsweise in R. G. Gilg, "Ruß für leifähige Kunststoffe" in : Elektrisch leitende Kunststoffe, Hrsg. : H. J. Mair, S. Roth, 2. Aufl., Carl Hanser Verlag, 1989, München, Wien, S. 21-36 beschrieben.

Erfindungsgemäß handelt es sich bei Graphitpulver um zerkleinerten Graphit. Unter Graphit versteht der Fachmann eine Modifikation des Kohlenstoffs, wie sie beispielweise in A. F. Hollemann, E. Wieberg, N. Wieberg, "Lehrbuch der anorganischen Chemie", 91.-100. Aufl., S. 701-702 beschrieben ist. Graphit besteht aus planaren Kohlenstoffschichten, die übereinander angeordnet sind.

Graphit kann erfindungsgemäß beispielsweise durch Mahlen zerkleinert werden. Die Partikelgröße liegt im Bereich von 0,01 µm bis 1 mm, bevorzugt im Bereich von 1 bis 300 µm, am meisten bevorzugt im Bereich von 2 bis 20 µm.

Kohlenstofffasern sind in einer Vielzahl von Typen handelsüblich. Sie werden aus organischen Ausgangsmaterialien hergestellt. Es kommen in erster Linie solche Verbindungen in Frage, die sich zunächst in eine unschmelzbare Zwischenstufe umwandeln lassen und anschließend unter Formerhalt in einem Pyrolyseprozess zum Kohlenstoff carbonisiert werden können wie Cellulose, Polyacrylnitril oder Pech. Bei der Carbonisierungsbehandlung werden alle Elemente bis auf den Hauptanteil Kohlenstoff gasförmig abgespalten. Der relative Kohlenstoffanteil steigt mit zunehmender Temperatur, die üblicherweise im Bereich von 1300 - 1500 °C liegt. Damit wird nach Herstellerangaben ein Kohlenstoffanteil von 90 bis 99 Gewichtsprozenten erreicht. Oberhalb 1800 °C spricht man von Graphitierung. Hierbei wird vor allem die Struktur der graphitischen Kohlenstoffschichten mehr und mehr perfektioniert. Der Schichtebenenabstand zwischen diesen Kohlenstoffschichten bleibt jedoch über dem vom eigentlichen Graphit bekannten Wert. Derartige "Graphitfasern" sind im Rahmen der Erfindung ebenfalls geeignet.

Typische Kohlenstofffasern haben in der Regel einen Durchmesser von größenordnungsmäßig etwa 5 bis 8 µm.

Bevorzugte Carbon Nanotubes haben typischerweise die Form von Röhren, die aus Graphitschichten gebildet werden. Die Graphitlagen sind in konzentrischer Art um die Zylinderachse angeordnet. Carbon Nanotubes werden auch als Kohlenstoff-Nanofibrillen bezeichnet. Sie haben ein Längen-zu-Durchmesser-Verhältnis von mindestens 5, vorzugsweise von mindestens 100, besonders bevorzugt von mindestens 1.000. Der Durchmesser der Nanofibrillen liegt typischerweise im Bereich von 0,003 bis 0,5 µm, vorzugsweise im Bereich von 0,005 bis 0,08 µm, besonders bevorzugt im Bereich von 0, 006 bis 0,05 µm. Die Länge der Kohlenstoff-Nanofibrillen beträgt typischerweise 0,5 bis 1.000 µm, vorzugsweise 0,8 bis 100 µm, besonders bevorzugt 1 bis 10 µm. Die Kohlenstoff-Nanofibrillen besitzen einen hohlen, zylinderförmigen Kern. Dieser Hohlraum hat typischerweise einen Durchmesser von 0,001 bis 0,1 µm, bevorzugt einen Durchmesser von 0,008 bis 0,015 µm. In einer typischen Ausführungsform der Carbon Nanotubes besteht die Wand der Fibrille um den Hohlraum beispielsweise aus 8 Graphitlagen. Die Kohlenstoff- Nanofibrillen können dabei als Agglomerate von bis zu 1.000 µm Durchmesser aus mehreren Nanofibrillen vorliegen. Die Agglomerate können die Form von Vogelnestern, von gekämmtem Garn oder von offenen Netzstrukturen besitzen. Die Synthese der Carbon Nanotubes erfolgt beispielsweise in einem Reaktor, der ein Kohlenstoff enthaltendes Gas und einen Metallkatalysator enthält, wie es z. B. in US-A 5 643 502 beschrieben wird.

Neben mehrwandigen Carbon Nanotubes (MWCNTs, multi-walled carbon nanotubes) können erfindungsgemäß auch einwandige Carbon Nanotubes (SWCNTs, single-walled carbon nanotubes) eingesetzt werden. SWCNTs haben typischerweise einen Durchmesser im Bereich weniger Nanometer, erreichen jedoch im Verhältnis zu ihrem Querschnitt beträchtliche Längen, typischerweise im Bereich mehrerer Mikrometer. Der strukturelle Aufbau von SWCNTs leitet sich von einatomigen Graphit-Lagen (Graphen) ab, die man sich zu einem nahtlosen Zylinder aufgerollt vorstellen kann. SWCNTs können hervorragende elektrische Leiter sein. Die erreichbaren Stromdichten liegen mit 10⁹ A/cm² etwa 1000-fach höher als bei Metalldrähten aus Kupfer oder Silber. Die Herstellung von SWCNTs wird beispielsweise in US 5 424 054 beschrieben.

Graphen ist die Bezeichnung für eine Modifikation des Kohlenstoffs mit zweidimensionaler Struktur, in der jedes Kohlenstoffatom von drei weiteren umgeben ist, so dass sich ein bienenwabenförmiges Muster ausbildet. Graphen ist strukturell eng mit dem Graphit verwandt, der sich gedanklich durch Übereinanderschichten mehrerer Graphene vorstellen lässt. Graphen kann in größeren Mengen durch Exfolierung von Graphit (Aufspaltung in die Basalebenen) gewonnen werden. Hierzu wird Sauerstoff in das Graphitgitter interkaliert, der dann partiell mit dem Kohlenstoff reagiert und eine intrinsische Abstoßung der Schichten bewirkt. Nach chemischer Reduktion können die Graphene in weiteren Schritten in Lösungen suspendiert und in Polymere eingebettet werden.

Die optional als Komponente e) mitverwendeten Metallsalze sind einfache oder komplexe Verbindungen, die als Kation Erdalkali- oder Alkali- und/oder Zinkkationen aufweisen, die als Anion beispielsweise solche ausgewählt aus der Gruppe Bis(perfluoralkylsulfonyl)amid bzw. - imid wie z. B. Bis(trifluormethylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Alkyl- und Arylsulfonate, perfluorierte Alkyl- und Arylsulfonate, Alkyl- und Arylcarboxylate, Perfluoralkylcarboxylate, Perchlorat, Tetrachloroaluminat, Saccharinat, und vorzugsweise Thiocyanat, Isothiocyanat, Dicyanamid, Tetraphenylborat, Tetrakis(pentafluorphenyl)borat, Tetrafluoroborat, Hexafluorophosphat, Phosphat und/oder Polyetherphosphate enthalten, wobei sich die Ladungen innerhalb der Anion-Kation-Kombinationen ausgleichen und wobei auch Mischungen unterschiedlicher Salze eingesetzt werden können. Als Alkalimetallkation des Metallsalzes sind das Natrium-, Kalium-, Lithium-und Cäsium-Kation bevorzugt.

Bevorzugte Mischungen sind insbesondere solche, die als Alkalimetallsalz NaSCN bzw. NaN(CN)₂ und/oder KPF₆ und als Salz mit einem nichtmetallischen Kation ein Imidazolinium- bzw. Imidazoliumsalz, vorzugsweise 1-Ethyl-3-methylimidazoliumethylsulfat (EMIM ES) enthalten. Ein geeignetes Material, welches ausschließlich ein Salz mit nichtmetallischem Kation enthält ist TEGO IL EMIM ES (Evonik Goldschmidt GmbH).

Neben den Bestandteilen a) bis e) kann die Formmasse noch Hilfs- oder Zusatzstoffe enthalten, die in unterschiedlichen Prozentsätzen vorhanden sein können, die zum Einstellen bestimmter Eigenschaften benötigt werden. Beispiele hierfür sind schlagzähmodifizierende Kautschuke, weitere Polymere wie z. B. Polyphenylenether, ABS oder Polyolefine, Weichmacher, Farbstoffe, Pigmente bzw. Füllstoffe wie Titandioxid, Zinksulfid, Silikate oder Carbonate, Flammschutzmittel, Verarbeitungshilfsmittel wie Wachse, Zinkstearat oder Calciumstearat, Entformungshilfsmittel, Glaskugeln, Glasfasern, Antioxidantien, UV-Absorber, HALS-Stabilisatoren oder Antidrippingmittel.

In einer möglichen Ausführungsform enthält die Polymerzusammensetzung 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polymeren sind bekannt. Eine allgemeine Übersicht über Weichmacher, die für Polymere geeignet sind, kann Gächter/Müller, Kunststoffadditive, C. Hanser Verlag, 3. Ausgabe, S.327-422 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Die erfindungsgemäße Polymerzusammensetzung wird aus den einzelnen Bestandteilen vorzugsweise durch Schmelzemischen in einem knetenden Aggregat hergestellt.

Die Komponenten b) und c) können jeweils für sich oder zusammen als Mischung direkt dem Granulat, der Polymerschmelze bzw. der Schmelze aller übrigen Komponenten zugegeben werden. Beispielsweise können sie über eine gegebenenfalls beheizte Pumpe über gegebenenfalls beheizte Zuleitungen über eine Flüssigdosierung im 1. Drittel der Extrusionstrecke zugegeben werden. Sie können jedoch auch jeweils für sich oder zusammen als Mischung in Form eines Masterbatches zugegeben werden. Ein derartiges Masterbatch kann etwa 20 bis etwa 70 Gew.-% dieser Komponenten enthalten. Der Rest des Masterbatches besteht üblicherweise aus dem verwendeten Polymer, wie es auch als Komponente a) eingesetzt wird, oder aus einem Polymer, das mit dem Polymer der Komponente a) verträglich ist. Die Mischung erfolgt bevorzugt bei erhöhter Temperatur um eine verbesserte Pumpbarkeit gewährleisten zu können.

Die erfindungsgemäße Polyamidzusammensetzung ist vorzugsweise eine Polyamidformmasse. Sie kann aber auch ein Pulver sein, das beispielsweise für Oberflächenbeschichtungen oder für schichtweise aufbauende Verfahren, etwa im Rapid Prototyping, dient, beispielsweise durch Lasersintem.

Aus der erfindungsgemäßen Polymerzusammensetzung bzw. Formmasse können Formteile nach allen üblichen Methoden des Standes der Technik hergestellt und weiterverarbeitet werden, beispielsweise durch Extrusion, Coextrusion, Blasformen oder Spritzgießen. Dabei werden unter dem Begriff "Formteil" auch flächige Körper, wie Folien oder Platten, verstanden. Die erhaltenen Formteile sind ebenfalls Gegenstand der Erfindung.

Überraschenderweise wurde gefunden, dass durch die Zugabe der Komponenten b) und c) die elektrisch dissipative bzw. antielektrostatische Wirkung bzw. die elektrische Leitfähigkeit, die durch die Komponente d) bewirkt wird, weiter verbessert wird. Hierbei ist bei gleichzeitiger Anwesenheit von b) und c) ein synergetischer Effekt feststellbar. Ist auch b) präsent, so ist die erforderliche Menge von c) zur Erreichung eines bestimmten Leitfähigkeitsniveaus nur halb so groß, als wenn c) alleine vorliegt. Durch die Verbesserung des Perkolationsverhaltens wird insgesamt nur eine geringere Menge der Komponente d) benötigt; dies ist insbesondere bei Verwendung von CNTs oder Graphen, die sehr teuer sind, von Vorteil.

Durch die bessere Dispergierung sowie durch die mögliche Reduzierung der Konzentration der Komponente d) weist die Polymerzusammensetzung eine verbesserte Oberflächengüte auf, die mittels Mikroskop oder besser noch durch die Messung des Reibungskoeffizienten oder des Glanzgrades bestimmbar ist.

Ein Gegenstand der Erfindung ist darüber hinaus ein Verfahren für die Fertigung von hochgeladenen (> 20 Gew.-% bis 70 Gew.-%) Masterbatches der vorgenannten flüssigen oder festen Dispergiermittel und der vorgenannten Salze mit einem nichtmetallischen Kation oder deren Mischungen.

Die Formteile aus der erfindungsgemäßen Polymerzusammensetzung finden weiten Einsatz dort, wo gute Leitfähigkeitseigenschaften in Verbindung mit guten mechanischen Eigenschaften verlangt werden, beispielsweise in den Industriebereichen Automobil, Luftfahrt und Elektronik sowie in Kommunikationstechnik, Sicherheitstechnik und Leichtbautechnik. Als beispielhafte Anwendungen seien Geräteschalter für exgeschützte Räume, antistatische Gehäuse, Kraftstofffilter sowie Steckverbinder genannt.

Überraschenderweise wurde weiterhin gefunden, dass der Gehalt des gesundheitsschädlichen Styrols in ungesättigten Polyesterharzen um mindestens 10% abgesenkt werden kann, um gleich gute oder bessere antistatische oder leitfähige Wirkung zu erzielen, wenn erfindungsgemäß beanspruchte Dispergiermittel oder auch Kombinationen von ihnen mit flüssigen Salzen mit einem nichtmetallischen Kation eingesetzt werden.

Überraschenderweise wurde weiterhin gefunden, dass die leitfähigen Ruße, Kohlenstofffasern, Graphen oder CNTs zusammen mit dem Dispergiermittel und zumindest einem Salze mit einem nichtmetallischen Kation bereits ohne gelöste Metallsalze eine verbesserte antistatische Wirkung bzw. erhöhte Leitfähigkeit aufweisen.

Ein Gegenstand der Erfindung ist daher die Verwendung von leitfähigen Rußen, Kohlenstofffasern, Graphen oder CNTs zusammen mit dem Dispergiermittel und zumindest einem Salze mit einem nichtmetallischen Kation als Antistatikum oder Leitfähigkeitsverbesserer für Kunststoffe, insbesondere für Polyolefine und Polyamid 6 und 6,6 sowie für UPES.

Ein weiterer Gegenstand der Erfindung sind Polymerzusammensetzungen die leitfähigen Ruß und/oder Kohlenstofffasern, Graphen und/oder CNTs zusammen mit einem Dispergiermittel und zumindest einem Salze mit einem nichtmetallischen Kation und gegebenenfalls zusätzlich Metallsalze enthalten.

### Polymerzusammensetzung

Ein weiterer Gegenstand der Erfindung ist, dass die erfindungsgemäß beanspruchten Polymerzusammensetzungen eine gleich gute oder verbesserte Kerbschlagzähigkeit gemessen nach IZOD aufweisen. Dies gilt nicht beschränkend darauf, aber besonders für den Fall von Polyamid 6 oder 6,6.

Ein weiterer Gegenstand der Erfindung ist damit auch das Verfahren zur Herstellung von antistatisch oder leitfähig ausgerüsteten Polymerzusammensetzungen oder Kunststoffcompound (der Begriff wird auch hier identisch mit der Bezeichnung Kunststoffzusammensetzung verwendet), wobei antistatisch im Rahmen der Anmeldung einen spezifischen Durchgangswiderstand gemäß IEC 60093 von mehr als 10⁹ Ωm (Ohm*m), bevorzugt von 10¹² - 10⁹ Ohm*m bedeutet und leitfähig einen Durchgangswiderstand von niedriger als 10⁹ Ohm*m, bevorzugt 10⁷ - 10⁻³ Ohm*m und besonders bevorzugt 10⁵ - 10⁻¹ Ohm*m im Rahmen der Anmeldung bedeutet. Unterschieden wird dabei bei dem Verfahren zur Herstellung hinsichtlich der Zusammensetzung des Kunststoffcompounds in Bezug auf die verwendete Komponente (d) als Kohlenstoffbasis:
d1) leitfähige Ruße oder Kohlenstofffasern oder Graphit oder
d2) CNTs oder Graphen oder
d3) Beliebige Mischungen aus a) und b)
   Fall d1)
      Bevorzugt wird ein spezifischer spezifischen Durchgangswiderstand gemäß IEC 60093 von maximal 10⁹ Ohm*m, bevorzugt 10⁸ bis 10⁶ Ohm*m bei Polymerzusammensetzungen, die 0 bis 15 Gew.-% mindestens eines Salzes mit nichtmetallischem Kation, 0 bis 5 Gew.-% mindestens eines Metallsalzes, 1 bis 25 Gew.-% mindestens eines Dispergiermittels, 15 bis 25 Gew.-% mindestens eines leitfähigen Rußes oder der Kohlenstofffasern oder Graphits und optional 0 bis 5 Gew.-% weiterer Additive enthalten, erreicht, wobei die restlichen zu 100 Gew.-% erforderlichen Mengen durch den entsprechenden duroplastischen oder thermoplastischen Kunststoff aufgefüllt werden. Insbesondere bevorzugt sind dabei Zusammensetzungen in denen 2,5 bis 10 Gew.-% mindestens eines Salzes mit nichtmetallischem Kation, 0 bis 2 Gew.-% mindestens eines Metallsalzes, 2,5 bis 15 Gew.-% mindestens eines Dispergiermittels und 15 bis 25 Gew.-% eines Leitrußes verwandt werden,
      oder
   Fall d2)
      Bevorzugt wird ein spezifischer Durchgangswiderstand von 10⁸ - 10⁶ Ohm*m, wenn in der Kunststoffzusammensetzung entweder direkt CNT oder Graphen in niedrigeren Konzentrationen dispergiert vorliegen hat oder aus einem CNT-Masterbatch der folgenden Zusammensetzung hergestellt werden kann, indem auf eine Anwendungskonzentration der CNT von 2-8 Gew.-% zurückverdünnt wird mit dem entsprechenden Kunststoff. Die Polymerzusammensetzungen enthaltend, die 0-15 Gew.-% mindestens eines Salzes mit nichtmetallischem Kation, 0-5 Gew.-% mindestens eines Metallsalzes, 1-20 Gew.-% mindestens eines Dispergiermittels, 1-20 Gew.-% einer oder mehreren CNTs und optional 0-5 Gew.-% weiterer Additive enthalten, erreicht, wobei die restlichen zu 100 Gew.-% erforderlichen Mengen durch den entsprechenden duroplastischen oder thermoplastischen Kunststoff aufgefüllt werden. Insbesondere bevorzugt sind dabei Zusammensetzungen in denen 1,0-8,0 Gew.-% mindestens eines Salzes mit nichtmetallischem Kation, 0 - 2 Gew.-% mindestens eines Metallsalzes, 1,0 - 8,0 Gew.-% mindestens eines Dispergiermittels bei 1,0 - 8,0 Gew.-% einer oder mehrerer CNTs verwandt werden.
      oder
   Fall d3) sind beliebige Mischungen aus a) und b), wobei ein spezifischer Durchgangswiderstand von maximal 10⁹ Ohm*m erreicht wird.

Bei den erfindungsgemäß verwendbaren Polymerzusammensetzungen handelt es sich um Thermoplaste oder Duroplaste, die als Homopolymer oder Copolymer vorliegen können, thermoplastische oder auch duroplastische Eigenschaften aufweisen und nicht-kristalline, teilkristalline oder auch kristalline Bereiche aufweisen können. Bevorzugt werden Polyolefine, wie etwa Low Density und High Density Polyethylen, Polypropylen, Polystyrol, Vinylpolymere, aber auch technische Kunststoffe wie spezielle Polyamid 6 oder 6,6, Polyester, Polyacetale, Polycarbonate oder auch Polyvinylchloride, Polyurethane, Polyether sowie deren Copolymere oder deren Mischungen in beliebigen Massenanteilen.

Ein weiterer Gegenstand der Erfindung ist auch ein Verfahren, bei dem CNTs nicht in der anwendungsfertigen Konzentration des zu spritzenden Artikels, die typischerweise im Bereich von 2 bis 8 Gew.-% in Abhängigkeit von der verwendeten Polymerzusammensetzung liegt, direkt hergestellt wird, sondern die CNTs in einem Masterbatch-Prozess vordispergiert werden (Konzentration der CNTs im Masterbatch können bei bis zu 20% liegen) und dann auf die Anwendungskonzentration zurückverdünnt werden.

Ein weiterer Gegenstand der Erfindung sind leitfähige Polymerzusammensetzungen, die daraus resultieren, dass sie mindestens 5% CNT enthalten.

Bevorzugt wird ein Durchgangswiderstand von 10⁶ - 10⁴ Ohm*m bei Polymerzusammensetzungen, die 0-10 Gew.-% eines Salzes mit nichtmetallischem Kation, 0-5 Gew.-% Metallsalz, 1-10 Gew.-% Dispergiermittel, 2-10 Gew.-% einer CNT und optional 0-5 Gew.-% weiterer Additive enthalten, wobei die restlichen zu 100 Gew.-% erforderlichen Mengen durch den entsprechenden duroplastischen oder thermoplastischen Kunststoff aufgefüllt werden, erreicht.

Weitere Gegenstände der Erfindung sind gekennzeichnet durch die Ansprüche, dass mittels der vorgenannten Kunststoffzusammensetzungen Artikel bzw. Anwendungen realisierbar sind, die mittels Spritzguss einen derartig niedrigen Oberflächen- und/oder Durchgangswiderstand aufweisen und nicht nur durch Verpressung herstellbar sind. D.h. der für die Praxis relevante Spritzguss von thermoplastischen Bauteilen ist realisierbar und der dabei auftretende Anisotropieeffekt, der bei der Verpressung unterdrückt wird, ist durch die erfindungsgemäße Verwendung der vorgenannten Dispergiermittel ggf. in Kombination mit Salzen mit nichtmetallischem Kation deutlichst reduzierbar, was an den verbesserten antistatischen oder leitfähigen Werten ersichtlich ist. Dies ist umso überraschender, da im Spritzguss das Netzwerk der fraktalen kohlenstoffbasierten Inhaltsstoffe durch die eingesetzte Temperatur und vor allem durch den gerichteten Druck beim Öffnen des Spritzgusswerkzeuges bzw. seiner Düse, um eine Platte, einen Formkörper in Form eines Schulterstabes oder auch ein elektronisches Bauteil oder eine Automobilteil zu fertigen, extrem gestört und beunruhigt wird. In dem anschließenden sehr schnellen Abkühlprozess, wobei kurze Zykluszeiten für hohen Teileausstoß erforderlich sind, steigt innerhalb von Sekunden die Viskosität der thermoplastischen Grundmatrix an, welche kaum Zeit für eine Neuorientierung des polymeren Netzwerkes und der darin enthaltenen kohlenstoffbasierten Komponenten lässt.

Die Vormischung der Komponenten ist dabei besonders bevorzugt aber nicht darauf beschränkt, wenn es sich um thermoplastische Polymerzusammensetzungen handelt, die mittels Extrusion/Compoundierung gefertigt werden. Die Zugabepositionen von Komponenten sind begrenzt oder würden in der Praxis in extrem teuren Ausführungen der Zudosierungen in Form von Anbauten an der Extrusionsstrecke resultieren, die ggf. die Einsparpotenziale durch eine geringfügigere Verwendung von z.B. teuren CNTs zunichte machen würden.

Ein bevorzugtes erfindungsgemäßes Verfahren basiert demgemäß auf der Verwendung von leitfähigen Rußen, Kohlenstofffasern, Graphen und/oder CNTs mit zumindest einem Salz mit einem nicht-metallischem Kation zusammen mit zumindest einem Dispergiermittel (Compatiblizer) und optional einem Metallsalz, insbesondere Alkalimetallsalze, in Kunststoffen dispergiert wird. Gegenstand der Erfindung ist auch ein Verfahren zur Herstellung von Masterbatches der Polymerzusammensetzungen bei dem 20 Gew.-% bis 70 Gew.-% der Dispergiermittel und optional der vorgenannten Metallsalze bezogen auf die gesamte Polymerzusammensetzung verwendet werden.

Weitere Gegenstände der Erfindung ergeben sich aus den Ansprüchen, deren Offenbarungsgehalt vollumfänglich Teil diese Beschreibung ist.

In den nachfolgend aufgeführten Beispielen wird die vorliegende Erfindung zur Verdeutlichung der Erfindung beschrieben, ohne dass die Erfindung, deren Anwendungsbreite sich aus der gesamten Beschreibung und den Ansprüchen ergibt, auf die in den Beispielen genannten Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden im Rahmen der vorliegenden Erfindung Verbindungen beschrieben, die verschiedene Monomereinheiten mehrfach aufweisen können, so können diese statistisch verteilt (statistisches Oligomer) oder geordnet (Blockoligomer) in diesen Verbindungen vorkommen. Angaben zu Anzahl von Einheiten in solchen Verbindungen sind als statistische Mittelwerte, gemittelt über alle entsprechenden Verbindungen, zu verstehen.

### Beispiele:

### Herstellung der Polymerzusammensetzungen

Thermoplastische Polymerzusammensetzungen wurden entweder mit einer Leistritz 27mm, 39L/D oder auch bei Verwendung von PA 6,6 und flüssigen Additiven bzw. Additivmischungen (Dispergiermittel und/oder Salz mit einem nichtmetallischen Kation) mit einer Leistritz 27MAXX, 44L/D gefertigt. Die kohlenstoffbasierten Produkte (Komponente d)) wurden dabei mittels eines separaten Feedings im ersten Drittel der Schneckenlänge aufgegeben. Das Temperaturprofil, was in den Zonen der Extrusion genutzt wurde, ist der Empfehlung des Herstellers des entsprechenden Thermoplasts vom Technischen Datenblatt entnommen. Gegebenenfalls wurden einzelne Komponenten vorgetrocknet. Die Polymerzusammensetzungen wurden mit einer Maschinenleistung von 3-10kg in Abhängigkeit vom Füllgrad und Polymer auf den oben genannten Maschinen verarbeitet.

Die duroplastischen Polymerzusammensetzungen wurden in einem 1 Liter Ansatz in einem 2 Liter großen kühlbaren Doppelmantelgefäß unter Verwendung eines Hochgeschwindigkeitsdispermaten der Firma Getzmann (Deutschland) gefertigt. Für die entscheidenden Versuche wurden dabei eine Vermahlung mit Perlen einer Größe von 1,6 - 2,1mm vorgenommen und eine Teflondoppelscheibe verwandt. Für Vorversuche wurde jedoch auch mit einer normalen 8 cm Zahnradscheibe aus Metall gearbeitet. Wichtig ist, dass in das flüssige Duroplastgemisch die erfinderisch beanspruchten Dispergiermittel und/oder Salze mit nichtmetallischen Kation und/oder das Metallsalz eingebracht werden und homogenisiert werden, wobei sich dabei nicht automatisch eine klare oder nicht wieder auftrennende Zusammensetzung ergibt und dann erst die kohlenstoffbasierten Zusätze hinzugegeben werden. Das birgt auch den Vorteil, dass damit die Zugabe rechtzeitig gestoppt werden kann bzw. fortgesetzt werden kann, wenn durch die erfindungsgemäß beanspruchten Zusammensetzungen höhere Füllgrade möglich sind, wie es z.B. beim partiellen Weglassen von Styrol in ungesättigten Polyestern beobachtet wurde.

### Messung des Oberflächenwiderstandes und Durchgangswiderstandes

Alle Prüfkörper (Herstellung der Platten siehe im Folgenden beschrieben) wurden bei Normklima (23 °C, 50 % Luftfeuchtigkeit) gelagert. 72 Stunden nach der Herstellung wurden die Prüfkörper auf ihren Oberflächenwiderstand mittels Widerstandsmessgerät (Hochohm - Messgerät HM 307 der Firma Fetronic GmbH) untersucht. Dazu wurde eine Gleichspannung angelegt von1 V, 10 V, 100 V oder 500 V, wobei sich die Messung bei 100 V für die Prüfkörper mit einer Schichtdicke von 2-4 mm als besonders relevant erwiesen hat. Der Oberflächenwiderstand des Prüfkörpers wurde je dreimal an der Oberseite und dreimal an der Unterseite gemessen. Aus diesen Werten wurde der Mittelwert gebildet. Die gemessenen und direkt am Gerät abgelesenen Werte wurden in Ohm [Ω] angegeben. Es wurde mit einer Rundelektrode gemessen und auf die Einstellung eines konstanten Wertes geachtet. Es ist darauf zu achten, dass sich die Probe nicht erwärmt, was jedoch bei den niedrigen angelegten Spannungen für 2-4 mm dicke Teile nicht relevant ist, sondern häufig nur an dünneren Substraten wie z.B. Folien auftritt. Der Blindwert (Prüfkörper einer nicht erfindungsgemäßen Kunststoffzusammensetzung) wurde jeweils vor einer zugehörigen Messreihe neu bestimmt, um Einflüsse einer geringfügigen Schwankung der Umgebung zu vermeiden bzw. bewerten zu können.

Der Oberflächenwiderstand ist also direkt ablesbar und ist nur durch die Geometrie der Rundelektrode, die die beiden Elektrodenteile zwischen denen der Strom fließt gegeben. Dahingegen ist der Durchgangswiderstand zu berechnen, da er zusätzlich die Plattendicke berücksichtigen muss, er wird mit der Einheit Ohm [Ω] * Länge angegeben.

### Messung des Reibungskoeffizienten(COF)

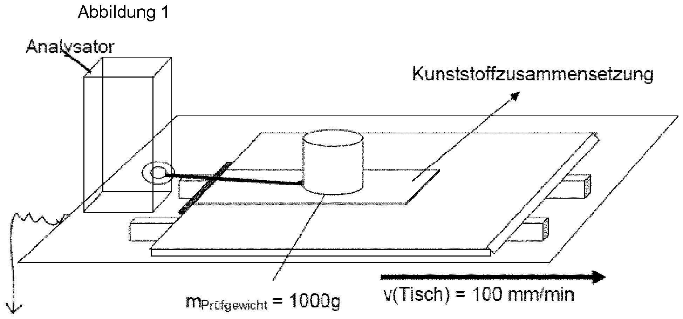

Die Messung des Reibungskoeffizienten erfolgt gemäß DIN EN ISO 8295, wobei die Abbildung 1 das Prinzip verdeutlicht. Es wird ein 1.000 g schweres Prüfgewicht mit einem Durchmesser von 4cm und einer Geschwindigkeit von 100mm/min über die Oberfläche der entsprechenden Platten der Polymerzusammensetzungen gezogen. Es ist dann eine einheitenlose Reibungszahl ablesbar bzw. aus dem Durchmesser und dem Gewicht des bewegten Zylinders lässt sich eine Kraft in Newton berechnen. Es werden stets drei Proben einer Polymerzusammensetzung verwendet und daraus der Mittelwert gebildet. Ist die Kraft um wenigstens 2 Newton niedriger als in der nichterfindungsgemäß zusammengesetzten Probe, ist von einer besseren Oberflächengüte auszugehen.

### Messung des Glanzgrades

Die Messung des Glanzes wurde an einer representativen Platte, hergestellt mittels Spritzguss oder durch Aushärtung eines Duroplastes in einer Vergussform, an mindestens drei Punkten vorgenommen und daraus der Mittelwert gebildet. Die Messung des Glanzes erfolgte mit dem DATACOLOR oder Byk Gardner (beide Hersteller Deutschland) gemäß der DIN EN ISO Normen 2813 und 5033, da sie mit der Farbmessung parallelisiert ist. Die Messung erfolgte im 20° und 60° Glanz. Ist der Glanz der erfindungsgemäß beanspruchten Polymerzusammensetzungen um 5 Einheiten höher in mindestens einem der Glanzgrade, so ist von einer signifikanten Verbesserung der Oberflächengüte auszugehen.

### Messung der Schlagzähigkeit (SZ) und der Kerbschlagzähigkeit (KSZ)

An den Prüfkörpern in Form von Schulterstäben hergestellt mittels Spritzguss für die Thermoplaste und an solchen hergestellt mittels Verguss und Aushärtung für die duroplastischen Polymerzusammensetzunge n wird die Messung der beiden Parameter für die Bestimmung von SZ und/oder KSZ vorgenommen. Für die Bestimmung eines Wertes werden dabei 10 Schulterstäbe pro Zusammensetzung vermessen, ein Mittelwert wird aus mindestens 8 der Proben gebildet, da ggf. der höchste und niedrigste Wert der Messung nicht herangezogen wird. Weisen die Proben nach der Durchführung Hohlräume oder Löcher im Bereich des Bruchs auf, darf dieser Wert ebenfalls nicht herangezogen werden und ggf. muss eine höhere Anzahl an Schulterstäben als 10 vermessen werden. Die Methode erfolgt gemäß DIN EN ISO 180, wobei für die SZ ein 1 Joule schwerer Hammer und bei der KSZ ein 4 Joule schwerer Hammer verwandt wird. Zusätzlich wird dabei bei der KSZ an dem 80mm Mittelstück des 4mm dicken Schulterstabes eine Kerbung mit einem Radius von 0,25mm angebracht. Die resultierenden Werte von SZ und KSZ ergeben sich in kJ/m², denn die gemessene Energie, die am Gerät abgelesen wird, wird um den Luftwiderstand reduziert und anschließend wird diese Größe durch das Produkt aus Dicke und Breite dividiert.

Wie dem Fachmann bekannt ist, kann nicht von jeder Kunststoffzusammensetzung die SZ bestimmt werden, aber stets die KSZ, z.B. bei PA 6.

**Fertigung der Prüfkörper** für die Bestimmung der mechanischen Kennzahlen insbesondere der Schlagzähigkeit (SZ) und Kerbschlagzähigkeit (KSZ) in Form von **Schulterstäben**

Die Schulterstäbe werden gemäß den Vorschriften für die anschließend durchzuführende Bestimmung gemäß DIN EN ISO 180) auf einer Spritzgussmaschine der Firma Engel (Deutschland) durch Spritzguss unter Verwendung der für die jeweilige thermoplastische Polymerzusammensetzung durch das Polymer vorgegebene und auf dessen Technischem Datenblatt (TDS) vorgeschriebene Temperatur gespritzt und 48 Stunden unter Normklima gelagert.

Entsprechende Schulterstäbe werden im Falle von duroplastischen Polymerzusammensetzungen vergossen und die Aushärtung erfolgt gemäß den Vorschriften unter Verwendung der Initiatoren wie z.B. von den Herstellern der ungesättigten Polyesterharzhersteller auf den Technischen Datenblättern vorgeschrieben.

**Fertigung der Prüfkörper** für die Bestimmung des Reibungskoeffizienten (Coefficient of Friction = COF) in Form von **Platten,** die ebenfalls für die Bestimmung der Widerstandswerte herangezogen werden

Von den thermoplastischen Polymerzusammensetzungen werden 6 cm x 6 cm große Platten mit einer Dicke von 0,2 cm gespritzt auf einer Maschine der Firma Engel (Deutschland), wobei die Parameter des Spritzgusses wie oben schon erwähnt durch das eingesetzte Polymer auf dessen TDS festgelegt sind.

Für die duroplastischen Polymerzusammensetzungen werden Platten wieder durch Verguss und Aushärtung hergestellt, wobei diese 6 cm x 12 cm sind und 0,2 cm oder 0,4 cm dick sind, was auch für die schichtdickenabhängige Betrachtung des Durchgangswiderstandes herangezogen werden konnte.

### Prüfung

Im Folgenden werden die gemäß der Erfindung gefertigten thermoplastischen Zusammensetzungen auf Basis von Polyamid 6 (PA 6) mit Vergleichsbeispielen aufgeführt, die keinen erfindungsgemäßen Oberflächen- oder Durchgangswiderstand aufweisen.

Die Polyamidcompounds werden gemäß der vorstehenden Beschreibung mit einem Doppelschneckenextruder gefertigt und haben die in Tabelle 1a und 1b beschriebenen Zusammensetzung.

Für die in den erfindungsgemäß beanspruchten Beispielen verwendeten flüssigen Additive TEGOMER DA 100N und DA 626 können erst 50%ige Masterbatche in Polyamid 6 (PA 6) hergestellt werden. Die flüssige Komponente B wurde mit einer beheizbaren Pumpe direkt in die Polymerschmelze dosiert.

Die Prüfkörper wurden in den Abmessungen 6cm * 6cm und einer Schichtdicke von 2 mm angefertigt. Die Proben erwärmten sich bei der Messung nicht über Raumtemperatur, welches auch die Messtemperatur war.

Diie Bestimmung der Glanzwerte wurde mit dem Messgerät der Firma Datacolor durchgeführt.

**Tabelle 1a: Zusammensetzungen**

| Komponente | a) | b) | c) | d) | e) |
|---|---|---|---|---|---|
| | Polymer | Salz mit nichtmetallischem Kation | Dispergiermittel TEGOMER | Kohlenstoffkomponente | Metallsalz |
| | Polyamid 6 | TEGO IL EMIM ES | P121 | Electrovac HTF 110 FF | NaN(CN)₂ |
| N1 | 89,75 | 0 | 0,25 | 10,00 | - |
| N2 | 85,00 | 0 | 5,00 | 10,00 | - |
| N 3 | 84,75 | 5,00 | 0,25 | 10,00 | - |
| E 1 (HW 1) | 79,50 | 5,00 | 5,00 | 10,00 | 0,50 |
| E 2 | 80,50 | 5,00 | 5,00 | 9,00 | 0,50 |
| E 3 (HW 2) | 79,50 | 5,00 | 5,00 | 10,00 | 0,50 |

| | | | | | |
|---|---|---|---|---|---|
| HW 1 = Direktdispergierung der CNT mit den anderen Komponenten im Polymer HW 2 = 2-stufige Herstellung, das heißt Herstellung eines 20%igen Masterbatches der CNT im Polymer und anschließende Rückverdünnung mit allen anderen Komponenten auf die Endkonzentration von 10% | | | | | |

**Tabelle 1b: Weitere Zusammensetzungen, analog zu Tabelle 1a**

| | a) | b) | c) | | | d) | e) |
|---|---|---|---|---|---|---|---|
| | Polyamid 6 | TEGO IL EMIM ES | P121 | DA 626 | DA 100N | Printex L6 | NaN(CN)2 |
| N 4 | 80,00 | - | - | - | - | 15,00 | - |
| N 5 | 70,00 | - | 10,00 | - | - | 15,00 | - |
| N 6 | 75,00 | 5,00 | - | - | - | 15,00 | - |
| E 4 | 65,00 | 5,00 | 10,00 | - | - | 15,00 | - |
| E 5 | 71,00 | 5,00 | - | 3,00 | - | 15,00 | 1,0 |
| E 6 | 68,00 | 7,00 | - | - | 5,00 | 15,00 | - |

Wie aus Tabelle 2 ersichtlich, ist die Verwendung von Komponente b) in Form des Salzes mit einem nichtmetallischen Kation in Kombination mit der Kohlenstoffkomponente genauso wenig ausreichend wie die alleinige Verwendung eines Dispergiermittels c), sondern nur die Kombination von b) und c) führt zu einem dispergierten Zustand mit einer ausreichenden Entwicklung eines Perkolationsnetzwerkes, was zu einer Polymerzusammensetzung mit einem Oberflächenwiderstand gemäß IEC 60167 von 10⁻¹ bis 10¹⁰ Ω und einem spezifischen druchgangswiderstand gemäß IEC 60093 resultiert.

Es ist aus Tabelle 2 ersichtlich, dass die erfindungsgemäßen Beispiele E 1 bis E 6 alle zur erfindungsgemäßen Absenkung der Oberflächen- und Durchgangswiderstände führen.

Die entsprechende Glanzerhöhung der Polymerzusammensetzungen ist deutlich ersichtlich, wodurch auch sichtbare Teile mit antistatischer oder leitfähiger Charakteristik erzeugt werden können, die ästhetischen Ansprüchen genügen. Dabei wurde der Glanzgrad des 60°Glanzes des nichterfindungsgemäßen Beispiels N 1 auf 100% gesetzt und die Erhöhung prozentual in Tabelle 2 angegeben, nd bezeichnet nicht gemessene/ermittelte Werte. Die Glanzwerte der erfindungsgemäßen Beispiele übersteigen den oben angegebenen Signifikanzwert von 105%.

**Tabelle 2: Ergebnisse, Oberflächenwiderstand R_{O} [Ohm]., Durchgangswiderstand R_{D} [Ohm * m] und Glanzwert der Zusammensetzungen gemäß Tabellen 1a und 1b**

| Komponente | R_{O} [Ohm]· | R_{D} [Ohm * m] | Glanz 60° [%] |
|---|---|---|---|
| N 1 | 4,5·10¹⁴ | 8,3·10¹³ | 100 |
| N 2 | 4,6·10¹⁰ | 8,5·10⁹ | nd |
| N 3 | 3,2·10¹² | 5,9·10¹¹ | nd |
| E 1 | 3,4·10⁶ | 6,2·10⁵ | 123 |
| E 2 | 7,8 10⁶ | 1,4 10⁵ | 116 |
| E 3 | 8,2·10⁵ | 2,4·10⁴ | nd |
| N 4 | 3,9·10¹³ | 7,1·10¹⁴ | 100 |
| N 5 | 5,5·10⁹ | 1,0·10¹¹ | nd |
| N 6 | 2,7·10¹⁰ | 4,9·10¹² | nd |
| E 4 | 6,6·10⁵ | 1,2·10⁷ | nd |
| E 5 | 5,6 10⁷ | nd | 119 |
| E 6 | 2,4 10⁵ | 5,1 10⁶ | nd |

## Patentansprüche

1. Polymerzusammensetzung, die folgende Komponenten enthalten:
a) mindestens 40 Gew.-Teile eines Polymers, das ausgewählt ist aus der Gruppe der Polymere umfassend:
a1) Thermoplaste, insbesondere lineare oder verzweigte Polymere oder (teil)kristalliner Thermoplaste, thermoplastische Elastomere, lineare oder thermolabil vernetzte Polymermoleküle, wobei die Polymere allein oder in beliebigen Mischungen oder als Co-Polymere eingesetzt werden können, oder
a2) Duroplaste, insbesondere solche die durch irreversible und engmaschige Vernetzung über kovalente Bindungen aus Oligomeren (technisch: Prepolymeren), seltener aus Monomeren oder Polymeren erhalten werden können,
wobei die Polymere allein oder in beliebigen Mischungen oder als Co-Polymere eingesetzt werden können, und wobei die Thermoplaste und Duroplaste alleine oder in beliebigen Mischungen eingesetzt werden können,
mit der Maßgabe, dass das Polymer a) kein Polyamid ist, dessen Monomereinheiten im arithmetischen Mittel mindestens 7,5 C-Atome aufweist und insbesondere kein Polyamid 12 ist,
b) 0,1 bis 15 Gew.-Teile eines Salzes mit einem nichtmetallischen Kation
c) 0,5 bis 25 Gew.-Teile eines Dispergiermittels auf Basis von Estern oder Amiden sowie
d) ein elektrisch leitfähiger Kohlenstoff, ausgewählt aus der Gruppe Ruß, Graphitpulver, Kohlenstofffasern, Carbon Nanotubes und/oder Graphen, in einer Menge, die in der Polymerzusammensetzung einen spezifischen Oberflächenwiderstand gemäß IEC 60167 von 10⁻¹ bis 10¹⁰ Ω.

2. Polymerzusammensetzung gemäß Anspruch 1,
**dadurch gekennzeichnet,**
**dass** sie
- 0,1 bis 10 Gew.-Teile der Komponente b),
- 1 bis 10 Gew.-Teile der Komponente c),
- 1 bis 10 Gew.-Teile Carbon Nanotubes als Komponente d) sowie
- 0 bis 5 Gew.-Teile ein Metallsalz als Komponente e) enthält.

3. Polymerzusammensetzung gemäß einem der vorhergehenden Ansprüche,
**dadurch gekennzeichnet,**
**dass** ihr spezifischer Durchgangswiderstand gemäß ICE 60093 maximal 10⁹ Ωm beträgt.

4. Polymerzusammensetzung gemäß einem der vorhergehenden Ansprüche,
**dadurch gekennzeichnet,**
**dass** das nichtmetallische Kation der Komponente b) eine quartäre Stickstoff- bzw. Phosphorverbindung ist.

5. Polymerzusammensetzung nach einem der vorhergehenden Ansprüche, **dadurch gekennzeichnet, dass** das nichtmetallischem Kation der Komponente (b) aus mindestens einem quartären Stickstoffkation der allgemeinen Formeln:
R¹R²R³R⁴N⁺ (1)
R¹R²N⁺=CR³R⁴ (2)
R¹R²R³R⁴P⁺ (3)
R¹R²P⁺=CR³R⁴ (4)
besteht, in denen
R¹, R², R³, R⁴ gleich oder verschieden sein können und Wasserstoff, einem linearen oder verzweigten oder Doppelbindungen enthaltenden aliphatischen Kohlenwasserstoffrest mit 1 bis 30 Kohlenstoffatomen oder einen gesättigten oder ungesättigten gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome enthaltenden Rest wie Sauerstoff, -NH-, -NR'-unterbrochenen linearen oder verzweigten gegebenenfalls ungesättigten aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O- -O-S(O₂)-, -S(O₂)-NH-, -NH-S(O₂)-, - S(O₂)-N(CH₃)-, -N(CH₃)-S(O₂)-, unterbrochenen linearen oder verzweigten oder auch Doppelbindungen enthaltenden aliphatischen Kohlenwasserstoffrest mit 2 bis 30 Kohlenstoffatomen, einen endständig -OH, -OR', -NH₂, -N(H)R',-N(R')₂ funktionalisierten linearen oder verzweigten oder auch Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R⁵-O)ₙ-R⁶ bedeutet,
wobei
R' gleich einem gesättigten oder ungesättigten C₁-C₃₀-Alkylrest, insbesondere -CH₃ ist,
R⁵ ein 2 bis 4 Kohlenstoffatome enthaltender linearer oder verzweigter Kohlenwasserstoffrest,
n 1 bis 100 ist und
R⁶ Wasserstoff, einen linearen oder verzweigten oder Doppelbindungen enthaltenden aliphatischen Kohlenwasserstoffrest mit 1 bis 30 Kohlenstoffatomen, oder einen Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest - C(O)-R⁷ mit
R⁷ gleich einem linearen oder verzweigten oder auch Doppelbindungen enthaltenden aliphatischen Kohlenwasserstoffrest mit 1 bis 30 Kohlenstoffatomen oder gleich einem Doppelbindungen enthaltenden cycloaliphatischen Kohlenwasserstoffrest mit 5 bis 40 Kohlenstoffatomen oder gleich einem aromatischen Kohlenwasserstoffrest mit 6 bis 40 Kohlenstoffatomen oder gleich einem Alkylarylrest mit 7 bis 40 Kohlenstoffatomen ist,
mit einem Anion ausgewählt aus der Gruppe der Halogenide, Carboxylate, Phosphate, Thiocyanate, Isothiocyanate, Dicyanamid, Sulfate, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Sulfonate, Tetrafluoroborate, Hexafluoro-phosphate, Bis(perfluoralkylsulfonyl)amide oder -imide, Bis(trifluormethylylsulfonyl)imid, Alkyl- und Aryltosylate, Perfluoralkyltosylate, Nitrate, Alkyl- und Arylcarboxylate, Perfluoralkylcarboxylate, Perchlorat, Tetrachloroaluminat, Saccharinat, Dicyanamid, Thiocyanat, Isothiocyanat, Tetraphenylborat, Tetrakis(pentafluorphenyl)borat, Tetrafluoroborat, Hexafluorophosphat, Polyetherphosphate und/oder Phosphat verwendet werden,
wobei sich die Ladungen innerhalb der Anion-Kation-Kombinationen ausgleichen und wobei auch Mischungen unterschiedlicher Salze eingesetzt werden können.

6. Polymerzusammensetzung gemäß einem der vorhergehenden Ansprüche, **dadurch gekennzeichnet, dass** als Komponente (b) Salze mit einem nichtmetallischen Kation ausgewählt aus der Gruppe der substituierten Ammonium-, Phosphonium-, Pyridinium-, Imidazolinium- und/oder Imidazolium- Kationen eingesetzt werden,
wobei sich die Ladungen innerhalb der Anion-Kation-Kombinationen ausgleichen und wobei auch Mischungen unterschiedlicher Salze eingesetzt werden können.

7. Polymerzusammensetzungen gemäß einem der vorhergehenden Ansprüche,
**dadurch gekennzeichnet,**
**dass** das Dispergiermittel der Komponente c) ausgewählt ist aus
c1) Polyacrylsäureestern, herstellbar durch Umesterung eines durch Polymerisation erhältlichen Polyacrylsäurealkylesters, dessen Alkylreste 1 bis 3 Kohlenstoffatome aufweisen, mit
a) gesättigten aliphatischen Alkoholen mit 4 bis 50 Kohlenstoffatomen und/oder
b) ungesättigten aliphatischen Alkoholen mit 4 bis 50 Kohlenstoffatomen, wobei a) und b) in solchen Mengen verwendet werden, dass 30 bis 100 % der Estergruppen umgeestert werden,
und/oder
c2) Polyester-Polyamin-Kondensationsprodukten, erhältlich durch die teilweise oder vollständige Umsetzung von
A) einem oder mehreren aminofunktionellen Polymeren, das mindestens vier Aminogruppen enthält, mit
B) einem oder mehreren Polyestem der allgemeinen Formeln (I)/(Ia)
T-C(O)-[O-A-C(O)]ₓ-OH (I)
T-O-[C(O)-A-O-]_{y}-Z (Ia)
und
C) einem oder mehreren Polyethem der allgemeinen Formel (II)/(IIa)
T-C(O)-B-Z (II)
T-O-B-Z (IIa)
worin
T ein Wasserstoffrest und/oder ein gegebenenfalls substituierter, linearer oder verzweigter Aryl, Arylalkyl, Alkyl- oder Alkenylrest mit 1 bis 24 Kohlenstoffatomen ist,
A mindestens ein zweiwertiger Rest ist, ausgesucht aus der Gruppe der linearen, verzweigten, cyclischen und aromatischen Kohlenwasserstoffe,
Z mindestens ein Rest ist, ausgesucht aus der Gruppe der Sulfonsäuren, Schwefelsäuren, Phosphonsäuren, Phosphorsäuren, Carbonsäuren, Isocyanate, Epoxide, insbesondere der Phosphorsäure und (Meth)-Acrylsäure,
B ein Rest der allgemeinen Formel (III) ist
-(CₗH₂ₗO)ₐ-(CₘH₂ₘO)_{b}-(CₙH₂ₙO)_{c}-(SO)_{d}- (III)
SO = -CH₂-CH(Ph)-O- mit Ph = Phenylrest,
a,b,c unabhängig voneinander Werte von 0 bis 100 sind,
mit der Maßgabe, dass die Summe aus a + b + c ≥ 0, vorzugsweise 5 bis 35, insbesondere 10 bis 20 ist, mit der Maßgabe, dass die Summe aus a + b + c + d > 0,
d ≥ 0, vorzugsweise 1 bis 5 ist,
l,m,n unabhängig voneinander ≥ 2, vorzugsweise 2 bis 4 ist,
x,y unabhängig voneinander ≥ 2 sind.

8. Polymerzusammensetzungen nach Anspruch 7, **dadurch gekennzeichnet, dass** das Dispergiermittel der Komponente c) ausgewählt ist aus (c1) Polyacrylsäureestern deren Alkylreste 1 bis 3 Kohlenstoffatome aufweisen, wobei mindestens 25 % der Estergruppen kurzkettig mit 1 bis 4 Kohlenstoffatomen im Alkoholanteil und mindestens 25 % der Estergruppen langkettig mit 10 bis 50 Kohlenstoffatomen im Alkoholanteil sind.

9. Polymerzusammensetzungen nach zumindest einem der vorhergehenden Ansprüche, **dadurch gekennzeichnet, dass** die Metallsalze der Komponente (e) als Anionen solche ausgewählt aus der Gruppe der Halogenide, Carboxylate, Phosphate, Thiocyanate, Isothiocyanate, Dicyanamid, Sulfate, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Sulfonate, Tetrafluoroborate, Hexafluor o-phosphate, Bis(perfluoralkylsulfonyl)amide oder -imide, Bis(trifluormethylylsulfonyl)imid, Alkyl- und Aryltosylate, Perfluoralkyltosylate, Nitrate, Alkyl- und Arylcarboxylate, Perfluoralkylcarboxylate, Perchlorat, Tetrarchloroaluminat, Saccharinat, Dicyanamid, Thiocyanat, Isothiocyanat, Tetraphenylborat, Tetrakis(pentafluorphenyl)borat, Tetrafluoroborat, Hexafluorophosphat, Polyetherphosphate und/oder Phosphat aufweisen
und als Kation Erdalkali- oder Alkali- und/oder Zink-Kationen aufweisen,
wobei sich die Ladungen innerhalb der Anion-Kation-Kombinationen ausgleichen und wobei auch Mischungen unterschiedlicher Salze eingesetzt werden können.

10. Polymerzusammensetzungen gemäß einem der vorhergehenden Ansprüche, **dadurch gekennzeichnet, dass** die Thermoplaste a1) ausgewählt sind aus Polyolefinen, Polypropylen oder Polyethylen, Polystyrol, Vinylpolymeren, Polyestern, Polyetherpolyolen, Polyacetaten, Polyvinylacetaten, Polyacetalen, Polycarbonaten, thermoplastische Polyurethanen, Ionomeren, TPEs - thermoplastische Elastomeren, Polyamiden, deren Monomereinheiten im Mittel weniger als 7,5 C-Atome enthalten, Polyphthalamide auf Basis von Terephthalsäure und/oder Isophthalsäure sowie Hexamethylendiamin und/oder 2-Methylpentandiamin und gegebenenfalls solche, die Caprolactam oder Hexamethylendiamin/Adipinsäure oder deren Derivate als Comonomere enthalten können.

11. Polymerzusammensetzungen gemäß einem der vorhergehenden Ansprüche, **dadurch gekennzeichnet, dass** die Duroplaste a2) ausgewählt sind aus amorphen Harzen, Diallylphthalat-Harzen (DAP), Epoxidharzen (EP), Harnstoff-Formaldehyd-Harzen (UF), Melamin-Formaldehyd-Harzen (MF), Melamin-Phenol-Formaldehyd-Harzen (MPF), Phenol-Formaldehyd-Harzen und/oder ungesättigten Polyesterharzen (UPES).

12. Formteil, hergestellt aus der Polymerzusammensetzung gemäß einem der vorhergehenden Ansprüche.

13. Verfahren zur Herstellung der Polymerzusammensetzungen nach einem der Ansprüche 1 bis 11, **dadurch gekennzeichnet, dass** leitfähige Ruße, Kohlenstofffasern, Graphit, Graphen und/oder CNTs mit zumindest einem Salz mit einem nicht-metallischen Kation zusammen mit zumindest einem Dispergiermittel und optional mit einem Metallsalz in Kunststoffen dispergiert werden.

14. Verfahren gemäß Anspruch 13, **dadurch gekennzeichnet, dass** für duroplastische Kunststoffe das oder die Dispergiermittel in Kombination mit flüssigen Salzen mit einem nichtmetallischen Kation gemischt werden oder in thermoplastischen Kunststoffen durch das Einbringen der Dispergiermittel in die Vormischung oder durch die Einbringung mittels einer Flüssigdosierung im ersten Drittel einer Extrusionsstrecke zugegeben werden.

15. Verfahren nach Anspruch 13 oder 14 zur Herstellung von Masterbatches der Polymerzusammensetzungen, **dadurch gekennzeichnet, dass** 20 Gew.-% bis 70 Gew.-% der Dispergiermittel und optional der vorgenannten Metallsalze bezogen auf die gesamte Polymerzusammensetzung verwendet werden.

16. Verfahren zur Herstellung von Polymerzusammensetzungen nach einem der Ansprüche 13 bis 15, **dadurch gekennzeichnet, dass**
d1) leitfähige Ruße oder Kohlenstofffasern oder Graphit oder
d2) CNTs oder Graphen oder
d3) beliebige Mischungen aus d1) und d2) verwendet werden,
wobei im
Fall d1) ein spezifischen Durchgangswiderstand gemäß IEC 60093 von maximal 10⁹ Ωm erreicht wird, die 0-15 Gew.-% mindestens eines Salzes mit nichtmetallischem Kation, 0-5 Gew.-% mindestens eines Metallsalzes, 1-25 Gew.-% mindestens eines Dispergiermittels, 15-25 Gew.-% mindestens des leitfähige Rußes oder der Kohlenstofffasern oder des Graphits und optional 0-5 Gew.-% weiterer Additive enthalten, wobei die restlichen zu 100 Gew.-% erforderlichen Mengen durch den entsprechenden duroplastischen oder thermoplastischen Kunststoff aufgefüllt werden.
oder im
Fall d2) ein spezifischer Durchgangswiderstand von 10⁸ - 10⁶ Ohm*m erreicht wird, wenn in der Polymerzusammensetzung entweder direkt CNT in niedrigeren Konzentrationen dispergiert vorliegen oder aus einem CNT-Masterbatch hergestellt wird, indem auf eine Anwendungskonzentration der CNT von 2-8 Gew.-% mit dem entsprechenden Kunststoff zurückverdünnt wird und die Polymerzusammensetzungen 0-15 Gew.-% mindestens eines Salzes mit nichtmetallischem Kation, 0-5 Gew.-% mindestens eines Metallsalzes, 1-20 Gew.-% mindestens eines Dispergiermittels, 1-20 Gew.-% einer oder mehreren CNTs oder Graphen und optional 0-5 Gew.-% weiterer Additive enthält, wobei die restlichen zu 100 Gew.-% erforderlichen Mengen durch den entsprechenden duroplastischen oder thermoplastischen Kunststoff aufgefüllt werden
oder
Fall d3) beliebige Mischungen aus a) und b), wobei ein spezifischer Durchgangswiderstand von maximal 10⁹ Ohm*m erreicht wird.

## Claims

1. Polymer composition comprising the following components:
a) at least 40 parts by weight of a polymer selected from the group of polymers consisting of:
a1) thermoplastics, in particular linear or branched polymers or (partially) crystalline thermoplastics, thermoplastic elastomers, l3inear or thermolabily crosslinked polymer molecules, where the polymers can be used either alone or in any mixtures or as copolymers, or
a2) thermosets, in particular those which can be obtained from oligomers (technically: prepolymers), more rarely from monomers or polymers, by irreversible and tight crosslinking via covalent bonds,
where the polymers can be used alone or in any mixtures or as copolymers, where the thermoplastics and thermosets can be used either alone or in any mixtures,
with the proviso that the polymer a) is not a polyamide whose monomer units have an arithmetic average of at least 7.5 carbon atoms and in particular is not polyamide 12,
b) from 0.1 to 15 parts by weight of a salt having a nonmetallic cation,
c) from 0.5 to 25 parts by weight of a dispersant based on esters or amides and
d) an electrically conductive carbon selected from the group consisting of carbon black, graphite powders, carbon fibres, carbon nanotubes and graphene in an amount which in the polymer composition a specific surface resistance in accordance with IEC 60167 of from 10⁻¹ to 10¹⁰ Ω.

2. Polymer composition according to Claim 1,
**characterized in that**
it contains
- from 0.1 to 10 parts by weight of component b),
- from 1 to 10 parts by weight of component c),
- from 1 to 10 parts by weight of carbon nanotubes as component d) and
- from 0 to 5 parts by weight of a metal salt as component e).

3. Polymer composition according to either of the preceding claims,
**characterized in that**
its specific volume resistance in accordance with IEC 60093 is not more than 10⁹ Ωm.

4. Polymer composition according to any of the preceding claims,
**characterized in that**
the nonmetallic cation of the component b) is a quaternary nitrogen or phosphorus compound.

5. Polymer composition according to any of the preceding claims, **characterized in that** the nonmetallic cation of the component (b) consists of at least one quaternary nitrogen cation of the general formulae:
R¹R²R³R⁴N⁺ (1)
R¹R²N⁺=CR³R⁴ (2)
R¹R²R³R⁴P⁺ (3)
R¹R²P⁺=CR³R⁴ (4)
where
R¹, R², R³, R⁴ can be identical or different and are each hydrogen, a linear or branched or double bond-containing aliphatic hydrocarbon radical having from 1 to 30 carbon atoms or a saturated or unsaturated, optionally double bond-containing cycloaliphatic hydrocarbon radical having from 5 to 40 carbon atoms, an aromatic hydrocarbon radical having from 6 to 40 carbon atoms, an alkylaryl radical having from 7 to 40 carbon atoms, a linear or branched, optionally unsaturated aliphatic hydrocarbon radical which has from 2 to 30 carbon atoms and is interrupted by a radical containing one or more heteroatoms, e.g. oxygen,-NH-, -NR'-, a linear or branched or double bond-containing aliphatic hydrocarbon radical which has from 2 to 30 carbon atoms and is interrupted by one or more functions selected from the group consisting of -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, a linear or branched or double bond-containing aliphatic or cycloaliphatic hydrocarbon radical which has from 1 to 30 carbon atoms and is terminally functionalized by -OH, -OR', -NH₂, -N(H)R', -N(R')₂ or a polyether -(R⁵-O)ₙ-R⁶ having a block or random structure,
where
R' is a saturated or unsaturated C₁-C₃₀-alkyl radical, in particular -CH₃,
R⁵ is a linear or branched hydrocarbon radical containing from 2 to 4 carbon atoms,
n is from 1 to 100, and
R⁶ is hydrogen, a linear or branched or double bond-containing aliphatic hydrocarbon radical having from 1 to 30 carbon atoms, or a double bond-containing cycloaliphatic hydrocarbon radical having from 5 to 40 carbon atoms, an aromatic hydrocarbon radical having from 6 to 40 carbon atoms, an alkylaryl radical having from 7 to 40 carbon atoms or a radical -C(O)-R⁷ where
R⁷ is a linear or branched or double bond-containing aliphatic hydrocarbon radical having from 1 to 30 carbon atoms or a double bond-containing cycloaliphatic hydrocarbon radical having from 5 to 40 carbon atoms or an aromatic hydrocarbon radical having from 6 to 40 carbon atoms or an alkylaryl radical having from 7 to 40 carbon atoms,
with an anion selected from the group consisting of halides, carboxylates, phosphates, thiocyanates, isothiocyanates, dicyanamide, sulphates, hydrogensulphate, alkylsulphates and arylsulphates, polyether sulphates and polyether sulphonates, perfluoroalkylsulphates, sulphonate, alkylsulphonates and arylsulphonates, perfluorinated alkylsulphonates and arylsulphonates, sulphonates, tetrafluoroborates, hexafluorophosphates, bis(perfluoroalkylsulphonyl)amides or bis(perfluoro-alkylsulphonyl)imides,
bis(trifluoromethylylsulphonyl)imide, alkyltosylates and aryltosylates, perfluoroalkyltosylates, nitrates, alkylcarboxylates and arylcarboxylates, perfluoroalkylcarboxylates, perchlorate, tetrachloroaluminate, saccharinate, dicyanamide, thiocyanate, isothiocyanate, tetraphenylborate, tetrakis(pentafluorophenyl)borate, tetrafluoroborate, hexafluorophosphate, polyether phosphates and/or phosphate are used,
where the charges within the anion-cation combinations balance and mixtures of different salts can also be used.

6. Polymer composition according to any of the preceding claims, **characterized in that** salts having a nonmetallic cation selected from the group consisting of substituted ammonium, phosphonium, pyridinium, imidazolinium and imidazolium cations are used as component (b),
where the charges within the anion-cation combinations balance and mixtures of different salts can also be used.

7. Polymer compositions according to any of the preceding claims,
**characterized in that**
the dispersant of component c) is selected from among
c1) polyacrylic esters, which can be prepared by esterification of an alkyl polyacrylate which can be obtained by polymerization and whose alkyl radicals have from 1 to 3 carbon atoms, with
a) saturated aliphatic alcohols having from 4 to 50 carbon atoms, and/or
b) unsaturated aliphatic alcohols having from 4 to 50 carbon atoms,
where a) and b) are used in such amounts that from 30 to 100% of the ester groups are transesterified,
and/or
c2) polyester-polyamine condensation products which can be obtained by partial or complete reaction of
A) one or more amino-functional polymers containing at least four amino groups with
B) one or more polyesters of the general formula (I) or (Ia)
T-C(O)-[O-A-C(O)]ₓ-OH (I)
T-O-[C(O)-A-O-]_{y}-Z (Ia)
and
C) one or more polyethers of the general formula (II) or (IIa)
T-C(O)-B-Z (II)
T-O-B-Z (IIa)
where
T is a hydrogen radical and/or an optionally substituted, linear or branched aryl, arylalkyl, alkyl or alkenyl radical having from 1 to 24 carbon atoms,
A is at least one divalent radical selected from the group consisting of linear, branched, cyclic and aromatic hydrocarbons,
Z is at least one radical selected from the group consisting of sulphonic acids, sulphuric acids, phosphonic acids, phosphoric acids, carboxylic acids, isocyanates, epoxides, in particular phosphoric acid and (meth)acrylic acid,
B is a radical of the general formula (III)
-(CₗH₂ₗO)ₐ-(CₘH₂ₘO)_{b}-(CₙH₂ₙO)_{c}-(SO)_{d}- (III)
SO = -CH₂-CH(Ph)-O- where Ph = phenyl radical,
a,b,c are each, independently of one another, from 0 to 100,
with the proviso that the sum a + b + c is ≥ 0, preferably from 5 to 35, in particular from 10 to 20, with the proviso that the sum a + b + c + d is > 0,
d is ≥ 0, preferably from 1 to 5,
l,m,n are each, independently of one another, ≥ 2, preferably from 2 to 4,
x,y are each, independently of one another, ≥ 2.

8. Polymer compositions according to claim 7, **characterized in that** the dispersant of component c) is selected from among (c1) polyacrylic esters whose alkyl radicals have from 1 to 3 carbon atoms, where at least 25% of the ester groups are short-chain groups having from 1 to 4 carbon atoms in the alkyl part and at least 25% of the ester groups are long-chain groups having from 10 to 50 carbon atoms in the alcohol part.

9. Polymer compositions according to at least one of the preceding claims, **characterized in that** the metal salts of the component (e) have anions selected from the group consisting of halides, carboxylates, phosphates, thiocyanates, isothiocyanates, dicyanamide, sulphates, hydrogensulphate, alkylsulphates and arylsulphates, polyether sulphates and polyether sulphonates, perfluoroalkylsulphates, sulphonate, alkylsulphonates and arylsulphonates, perfluorinated alkylsulphonates and arylsulphonates, sulphonates, tetrafluoroborates, hexafluorophosphates, bis(perfluoroalkylsulphonyl)amides or bis(perfluoroalkylsulphonyl)imides,
bis(trifluoromethylylsulphonyl)imide, alkyltosylates and aryltosylates, perfluoroalkyltosylates, nitrates, alkylcarboxylates and arylcarboxylates, perfluoroalkylcarboxylates, perchlorate, tetrachloroaluminate, saccharinate, dicyanamide, thiocyanate, isothiocyanate, tetraphenylborate, tetrakis(pentafluorophenyl)borate, tetrafluoroborate, hexafluorophosphate, polyether phosphates and/or phosphate, and alkaline earth metal or alkali metal and/or zinc cations as cation,
where the charges within the anion-cation combinations balance and mixtures of different salts can also be used.

10. Polymer compositions according to any of the preceding claims, **characterized in that** the thermoplastics a1) are selected from among polyolefins, polypropylene and polyethylene, polystyrene, vinyl polymers, polyesters, polyether polyols, polyacetates, polyvinyl acetates, polyacetals, polycarbonates, thermoplastic polyurethanes, ionomers, TPEs, viz. thermoplastic elastomers, polyamides whose monomer units contain an average of less than 7.5 carbon atoms, polyphthalamides based on terephthalic acid and/or isophthalic acid and hexamethylenediamine and/or 2-methylpentanediamine and optionally those which can contain caprolactam or hexamethylenediamine/adipic acid or derivatives thereof as comonomers.

11. Polymer compositions according to any of the preceding claims, **characterized in that** the thermosets a2) are selected from amorphous resins, diallyl phthalate resins (DAP), epoxy resins (EP), urea-formaldehyde resins (UF), melamine-formaldehyde resins (MF), melamine-phenol-formaldehyde resins (MPF), phenol-formaldehyde resins and unsaturated polyester resins (UPES).

12. Moulding produced from the polymer composition according to any of the preceding claims.

13. Process for producing the polymer compositions according to any of Claims 1 to 11, **characterized in that** conductive carbon blacks, carbon fibres, graphite, graphene and/or CNTs are dispersed with at least one salt having a nonmetallic cation together with at least one dispersant and optionally a metal salt in plastics.

14. Process according to Claim 13, **characterized in that** the dispersant or dispersants are combined with liquid salts having a nonmetallic cation in the case of thermoset polymers or are added by introduction of the dispersant into the premix or by introduction by means of metering of liquid in the first third of an extrusion section in the case of thermoplastic polymers.

15. Process according to Claim 13 or 14 for producing masterbatches of the polymer compositions, **characterized in that** from 20% by weight to 70% by weight of the dispersants and optionally of the abovementioned metal salts, based on the total polymer composition, are used.

16. Process for producing polymer compositions according to any of Claims 13 to 15, **characterized in that**
d1) conductive carbon blacks or carbon fibres or graphite or
d2) CNTs or graphene or
d3) any mixtures of d1) and d2) are used,
wherein
case d1) a specific volume resistance in accordance with IEC 60093 of not more than 10⁹ Ωm is achieved, which contain 0-15% by weight of at least one salt having a nonmetallic cation, 0-5% by weight of at least one metal salt, 1-25% by weight of at least one dispersant, 15-25% by weight of at least the conductive carbon black or the carbon fibres or the graphite and optionally 0-5% by weight of further additives, where the balance to 100% by weight is made up by the respective thermoset or thermoplastic polymer,
or in
case d2) a specific volume resistance of 10⁸ - 10⁶ ohm*m is achieved when CNTs are either dispersed directly in relatively low concentrations in the polymer composition or a CNT masterbatch is produced and backdiluted with the corresponding polymer to a use concentration of the CNTs of 2-8% by weight and the polymer compositions comprise 0-15% by weight of at least one salt having a nonmetallic cation, 0-5% by weight of at least one metal salt, 1-20% by weight of at least one dispersant, 1-20% by weight of one or more CNTs or graphene and optionally 0-5% by weight of further additives, where the balance to 100% by weight is made up by the respective thermoset or thermoplastic polymer or in
case d3) any mixtures of a) and b), where a specific volume resistance of not more than 10⁹ ohm*m is achieved.

## Revendications

1. Composition polymère, qui contient les composants suivants :
a) au moins 40 parties en poids d'un polymère qui est choisi dans le groupe des polymères comprenant :
a1) les thermoplastiques, en particulier les polymères linéaires ou ramifiés ou les thermoplastiques (partiellement) cristallins, les élastomères thermoplastiques, les molécules polymères linéaires ou réticulées de manière thermolabile, les polymères pouvant être utilisés seuls ou dans des mélanges quelconques ou sous forme de copolymères, ou
a2) les thermodurcissables, en particulier ceux qui peuvent être obtenus par réticulation irréversible et à mailles étroites via des liaisons covalentes à partir d'oligomères (techniquement : prépolymères), plus rarement à partir de monomères et de polymères,
les polymères pouvant être utilisés seuls ou dans des mélanges quelconques ou sous forme de copolymères et les thermoplastiques et les thermodurcissables pouvant être utilisés seuls ou dans des mélanges quelconques,
à condition que le polymère a) ne soit pas un polyamide dont les unités monomères présentent en moyenne arithmétique au moins 7,5 atomes de carbone et ne soit en particulier pas un polyamide 12,
b) 0,1 à 15 parties en poids d'un sel présentant un cation non métallique,
c) 0,5 à 25 parties en poids d'un dispersant à base d'esters ou d'amides ainsi que
d) un carbone électriquement conducteur, choisi dans le groupe formé par la suie, la poudre de graphite, les fibres de carbone, les nanotubes de carbone et/ou le graphène, en une quantité qui une résistance surfacique spécifique dans la composition polymère, selon la norme IEC 60167, de 10⁻¹ à 10¹⁰ Ω.

2. Composition polymère selon la revendication 1, **caractérisée en ce qu'**elle contient
- 0,1 à 10 parties en poids de composant b),
- 1 à 10 parties en poids de composant c),
- 1 à 10 parties en poids de nanotubes de carbone en tant que composant d) ainsi que
- 0 à 5 parties en poids d'un sel métallique en tant que composant e).

3. Composition polymère selon l'une quelconque des revendications précédentes, **caractérisée en ce que** sa résistance de contact spécifique selon la norme IEC 60093 est d'au maximum 10⁹ Ωm.

4. Composition polymère selon l'une quelconque des revendications précédentes, **caractérisée en ce que** le cation non métallique du composant b) est un composé d'azote ou de phosphore quaternaire.

5. Composition polymère selon l'une quelconque des revendications précédentes, **caractérisée en ce que** le cation non métallique du composant (b) est constitué par au moins un cation d'azote quaternaire présentant les formules générales :
R1R²R³R⁴N⁺ (1)
R¹R²N⁺=CR³R⁴ (2)
R¹R²R³R⁴P⁺ (3)
R¹R²P⁺=CR³R⁴ (4)
dans lesquelles
R¹, R², R³, R⁴ peuvent être identiques ou différents et représentent hydrogène ; un radical hydrocarboné aliphatique linéaire ou ramifié ou contenant des doubles liaisons, comprenant 1 à 30 atomes de carbone ; ou un radical hydrocarboné cycloaliphatique saturé ou insaturé, contenant le cas échéant des doubles liaisons, comprenant 5 à 40 atomes de carbone ; un radical hydrocarboné aromatique comprenant 6 à 40 atomes de carbone ; un radical alkylaryle comprenant 7 à 40 atomes de carbone ; un radical hydrocarboné aliphatique, linéaire ou ramifié, le cas échéant insaturé, comprenant 2 à 30 atomes de carbone, interrompu par un radical contenant un ou plusieurs hétéroatomes, tels que l'oxygène, -NH-, -NR'- ; un radical hydrocarboné aliphatique linéaire ou ramifié ou contenant également des doubles liaisons, comprenant 2 à 30 atomes de carbone, interrompu par une ou plusieurs fonctionnalités, choisies dans le groupe formé par -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)- ; un radical hydrocarboné aliphatique linéaire ou ramifié ou contenant également des doubles liaisons ou cycloaliphatique, comprenant 1 à 30 atomes de carbone, fonctionnalisé en position d'extrémité par -OH, -OR', -NH₂, -N(H)R', -N(R')₂ ; ou un polyéther présentant une structure séquencée ou statistique selon -(R⁵-O)ₙ-R⁶,
où
R' représente un radical C₁-C₃₀-alkyle saturé ou insaturé, en particulier -CH₃,
R⁵ représente un radical hydrocarboné linéaire ou ramifié, comprenant 2 à 4 atomes de carbone,
n vaut 1 à 100 et
R⁶ représente hydrogène ; un radical hydrocarboné aliphatique linéaire ou ramifié ou contenant des doubles liaisons, comprenant 1 à 30 atomes de carbone ; ou un radical hydrocarboné cycloaliphatique contenant des doubles liaisons, comprenant 5 à 40 atomes de carbone ; un radical hydrocarboné aromatique comprenant 6 à 40 atomes de carbone ; un radical alkylaryle comprenant 7 à 40 atomes de carbone ; ou un radical -C(O)-R⁷ avec
R⁷ représentant un radical hydrocarboné aliphatique linéaire ou ramifié ou contenant également des doubles liaisons, comprenant 1 à 30 atomes de carbone ; ou un radical hydrocarboné cycloaliphatique contenant des doubles liaisons, comprenant 5 à 40 atomes de carbone ; ou un radical hydrocarboné aromatique comprenant 6 à 40 atomes de carbone ; ou un radical alkylaryle comprenant 7 à 40 atomes de carbone,
avec un anion choisi dans le groupe constitué par les halogénures, les carboxylates, les phosphates, les thiocyanates, les isothiocyanates, le dicyanamide, les sulfates, l'hydrogénosulfate, les alkylsulfates et les arylsulfates, les polyéthersulfates et les polyéthersulfonates, les perfluoroalkylsulfates, le sulfonate, les alkylsulfonates et les arylsulfonates, les alkylsulfonates et les arylsulfonates perfluorés, les sulfonates, les tétrafluoroborates, les hexafluorophosphates, les bis(perfluoroalkylsulfonyl)amides ou les bis(perfluoroalkylsulfonyl)imides, le bis(trifluorométhylylsulfonyl)imide, les alkyltosylates et les aryltosylates, les perfluoroalkyltosylates, les nitrates, les alkylcarboxylates et les arylcarboxylates, les perfluoroalkylcarboxylates, le perchlorate, le tétrachloroaluminate, le saccharinate, le dicyanamide, le thiocyanate, l'isothiocyanate, le tétraphénylborate, le tétrakis(pentafluorophényl)borate, le tétrafluoroborate, l'hexafluorophosphate, les polyétherphosphates et/ou le phosphate sont utilisés, les charges dans les combinaisons anion-cation s'équilibrant et des mélanges de différents sels pouvant également être utilisés.

6. Composition polymère selon l'une quelconque des revendications précédentes, **caractérisée en ce qu'**on utilise, comme composant (b), des sels présentant un cation non métallique choisi dans le groupe formé par les cations substitués d'ammonium, de phosphonium, de pyridinium, d'imidazolinium et/ou d'imidazolium,
les charges dans les combinaisons anion-cation s'équilibrant et des mélanges de différents sels pouvant également être utilisés.

7. Compositions polymères selon l'une quelconque des revendications précédentes, **caractérisées en ce que** le dispersant du composant c) est choisi parmi
c1) les poly(esters de l'acide acrylique), pouvant être préparés par transestérification d'un poly(ester alkylique de l'acide acrylique) pouvant être obtenu par polymérisation, dont les radicaux alkyle présentent 1 à 3 atomes de carbone, avec
a) des alcools aliphatiques saturés comprenant 4 à 50 atomes de carbone et/ou
b) des alcools aliphatiques insaturés comprenant 4 à 50 atomes de carbone,
a) et b) étant utilisés en des quantités telle que 30 à 100% des groupes ester sont transestérifiés, et/ou
c2) les produits de condensation de polyester-polyamine, pouvant être obtenus par la transformation partielle ou complète de
A) un ou plusieurs polymères à fonctionnalité amino, qui contien(nen)t au moins quatre groupes amino, avec
B) un ou plusieurs polyesters des formules générales (I)/(Ia)
T-C(O)-[O-A-C(O)]ₓ-OH (I)
T-O-[C(O)-A-O-]_{y}-Z (Ia)
et
C) un ou plusieurs polyéthers de formule générale (II)/(IIa)
T-C(O)-B-Z (II)
T-O-B-Z (IIa)
où
T représente un radical hydrogène et/ou un radical aryle, arylalkyle, alkyle ou alcényle le cas échéant substitué, linéaire ou ramifié, comprenant 1 à 24 atomes de carbone,
A représente au moins un radical divalent, choisi dans le groupe des hydrocarbures linéaires, ramifiés, cycliques et aromatiques,
Z représente au moins un radical choisi dans le groupe des acides sulfoniques, des acides sulfuriques, des acides phosphoniques, des acides phosphoriques, des acides carboxyliques, des isocyanates, des époxydes, en particulier l'acide phosphorique et l'acide (méth)acrylique,
B représente un radical de formule générale (III) -(CₗH₂ₗO)ₐ-(CₘH₂ₘO)_{b}-(CₙH₂ₙO)_{c}-(SO)_{d}- (III) SO = -CH₂-CH(Ph)-O- avec Ph = radical phényle,
a,b,c représentent, indépendamment les uns des autres, des valeurs de 0 à 100, à condition que la somme a + b + c soit ≥ 0, de préférence de 5 à 35, en particulier de 10 à 20, à condition que la somme de a + b + c + d soit > 0
d est ≥ 0, de préférence de 1 à 5,
l,m,n indépendamment les uns des autres, sont ≥ 2, de préférence de 2 à 4,
x,y indépendamment l'un de l'autre sont ≥ 2.

8. Compositions polymères selon la revendication 7, **caractérisées en ce que** le dispersant du composant c) est choisi parmi (c1) les poly(esters de l'acide acrylique), dont les radicaux alkyle présentent 1 à 3 atomes de carbone, au moins 25% des groupes ester étant à courte chaîne comprenant 1 à 4 atomes de carbone dans la partie alcool et au moins 25% des groupes ester étant à longue chaîne comprenant 10 à 50 atomes de carbone dans la partie alcool.

9. Compositions polymères selon au moins l'une quelconque des revendications précédentes, **caractérisée en ce que** les sels métalliques du composant (e) présentent, comme anions, ceux choisis dans le groupe constitué par les halogénures, les carboxylates, les phosphates, les thiocyanates, les isothiocyanates, le dicyanamide, les sulfates, l'hydrogénosulfate, les alkylsulfates et les arylsulfates, les polyéthersulfates et les polyéthersulfonates, les perfluoroalkylsulfates, le sulfonate, les alkylsulfonates et les arylsulfonates, les alkylsulfonates et les arylsulfonates perfluorés, les sulfonates, les tétrafluoroborates, les hexafluorophosphates, les bis(perfluoroalkylsulfonyl)amides ou les bis(perfluoroalkylsulfonyl)imides, le bis(trifluorométhylylsulfonyl)imide, les alkyltosylates et les aryltosylates, les perfluoroalkyltosylates, les nitrates, les alkylcarboxylates et les arylcarboxylates, les perfluoroalkylcarboxylates, le perchlorate, le tétrachloroaluminate, le saccharinate, le dicyanamide, le thiocyanate, l'isothiocyanate, le tétraphénylborate, le tétrakis(pentafluorophényl)borate, le tétrafluoroborate, l'hexafluorophosphate, les polyétherphosphates et/ou le phosphate et, comme cation, des cations de métal alcalino-terreux ou de métal alcalin et/ou de zinc,
les charges dans les combinaisons anion-cation s'équilibrant et des mélanges de différents sels pouvant également être utilisés.

10. Compositions polymères selon l'une quelconque des revendications précédentes, **caractérisées en ce que** les thermoplastiques a1) sont choisis parmi les polyoléfines, le polypropylène ou le polyéthylène, le polystyrène, les polymères de vinyle, les polyesters, les polyétherpolyols, les polyacétates, les poly(acétates de vinyle), les polyacétals, les polycarbonates, les polyuréthanes thermoplastiques, les ionomères, les élastomères thermoplastiques à base de copolymères séquencés de styrène (TPE), les polyamides, dont les unités monomères contiennent en moyenne moins de 7,5 atomes de carbone, les polyphtalamides à base d'acide téréphtalique et/ou d'acide isophtalique ainsi que l'hexaméthylènediamine et/ou la 2-méthylpentanediamine et le cas échéant ceux qui contiennent du caprolactame ou de l'hexaméthylènediamine/acide adipique ou leurs dérivés comme comonomères.

11. Compositions polymères selon l'une quelconque des revendications précédentes, **caractérisées en ce que** les thermodurcissables a2) sont choisis parmi les résines amorphes, les résines de phtalate de diallyle (DAP), les résines époxyde (EP), les résines d'urée-formaldéhyde (UF), les résines de mélamine-formaldéhyde (MF), les résines de mélamine-phénol-formaldéhyde (MPF), les résines de phénolformaldéhyde et/ou les résines de polyester insaturées (UPES).

12. Pièce moulée, produite à partir de la composition polymère selon l'une quelconque des revendications précédentes.

13. Procédé pour la préparation des compositions polymères selon l'une quelconque des revendications 1 à 11, **caractérisé en ce que** des suies conductrices, des fibres de carbone, du graphite, du graphène et/ou des NTC sont dispersés avec au moins un sel présentant un cation non métallique, ensemble avec au moins un dispersant et éventuellement un sel métallique, dans des matériaux synthétiques.

14. Procédé selon la revendication 13, **caractérisé en ce que**, pour des matériaux synthétiques thermodurcissables, le ou les dispersants sont mélangés en combinaison avec des sels liquides présentant un cation non métallique ou, dans des matériaux synthétiques thermoplastiques, le ou les dispersants sont ajoutés par leur introduction dans le prémélange ou par l'introduction au moyen d'un dosage liquide dans le premier tiers d'une vis d'extrusion.

15. Procédé selon la revendication 13 ou 14 pour la préparation de mélanges maîtres des compositions polymères, **caractérisé en ce qu'**on utilise 20% en poids à 70% en poids de dispersants et éventuellement de sels métalliques susmentionnés, par rapport à la totalité de la composition polymère.

16. Procédé pour la préparation de compositions polymères selon l'une quelconque des revendications 13 à 15, **caractérisé en ce qu'**on utilise
d1) des suies conductrices ou des fibres de carbone ou du graphite ou
d2) des NTC ou du graphène ou
d3) des mélanges quelconques de d1) et de d2) où,
dans le cas de d1), on atteint une résistance de contact spécifique selon la norme IEC 60093 d'au maximum 10⁹ Ωm, qui contiennent 0-15% en poids d'au moins un sel présentant un cation non métallique, 0-5% en poids d'au moins un sel métallique, 1-25% en poids d'au moins un dispersant, 15-25% en poids au moins de la suie conductrice ou des fibres de carbone ou du graphite et éventuellement 0-5% en poids d'autres additifs, le reste de la quantité nécessaire jusqu'à 100% en poids étant complété par le matériau synthétique thermodurcissable ou thermoplastique correspondant ou
dans le cas de d2), on atteint une résistance de contact spécifique de 10⁸-10⁶ Ohm*m, lorsque la composition polymère, soit contient directement des NTC en des concentrations basses sous forme dispersée, soit est préparée à partir d'un mélange maître de NTC, **en ce qu'**on dilue en retour à une concentration d'utilisation en NTC de 2-8% en poids par le matériau synthétique correspondant et que la composition polymère contient 0-15% en poids d'au moins un sel présentant un cation non métallique, 0-5% en poids d'au moins un sel métallique, 1-20% en poids d'au moins un dispersant, 1-20% en poids d'un ou de plusieurs NTC ou de graphène et éventuellement 0-5% en poids d'autres additifs, le reste de la quantité nécessaire jusqu'à 100% en poids étant complété par le matériau synthétique thermodurcissable ou thermoplastique correspondant ou
dans le cas de d3) des mélanges quelconques de a) et b), une résistance de contact spécifique d'au maximum 10⁹ Ohm*m est atteinte.
